# EUROPÄISCHE PATENTANMELDUNG

(11) **EP 4 105 899 A1**
(43) Veröffentlichungstag der Anmeldung: **21.12.2022**
(21) Anmeldenummer: 21180270.7
(22) Anmeldetag: 18.06.2021
(51) Int. Cl.: G07C 9/00, E05F 15/00

(54) **VERFAHREN ZUR ERMITTLUNG UND/ODER ÜBERPRÜFUNG EINES STATUS EINES TÜRSYSTEMS, VERFAHREN ZUR ERZEUGUNG EINES MODELLS, STATUSERMITTLUNGSEINRICHTUNG, SYSTEM, COMPUTERPROGRAMMPRODUKT**

(71) Anmelder: dormakaba Deutschland GmbH, 58256 Ennepetal (DE)
(72) Erfinder: Friedrich, Benjamin, 58256 Ennepetal (DE); Halder, Ingo, 58256 Ennepetal (DE); Wagner, Martin, 58256 Ennepetal (DE)
(74) Vertreter: Balder IP Law, S.L.

(57) **Zusammenfassung**

Die Erfindung betrifft ein Verfahren zur Ermittlung und/oder Überprüfung eines Status eines Türsystems, wobei das Türsystem zumindest ein erstes Untersystem und ein zweites Untersystem aufweist,
wobei das Verfahren die folgenden Schritte umfasst:
-- in einem Messschritt wird mindestens eine Messinformation betreffend das Türsystem ermittelt,
-- in einem Statusermittlungsschritt wird mithilfe eines Modells sowie mithilfe der mindestens einen ermittelten Messinformation der Status des Türsystems ermittelt und/oder überprüft, wobei das Modell einen ersten Modellblock für das erste Untersystem und einen zweiten Modellblock für das zweite Untersystem aufweist.

## Beschreibung

Die Erfindung betrifft ein Verfahren zur Ermittlung und/oder Überprüfung eines Status eines Türsystems. Des Weiteren betrifft die Erfindung ein Verfahren zur Erzeugung eines Modells. Ferner betrifft die Erfindung eine Statusermittlungseinrichtung zur Ermittlung und/oder Überprüfung eines Status eines Türsystems sowie ein derartiges System und ein Computerprogrammprodukt.

Türvorrichtungen und deren Teilsysteme bzw. Türsysteme leiden im Betrieb typischerweise unter Verschleißerscheinungen, die durch die Nutzung der Türvorrichtung, durch die Alterung der Teile und Komponenten oder durch Umgebungseinflüsse bedingt sein können. Solche Verschleißerscheinungen können dabei von einer Vielzahl von Einflüssen abhängen und sich sehr unterschiedlich und mit unterschiedlicher Geschwindigkeit ausbilden. Generell können verschiedene Türsysteme einer Türvorrichtung von Verschleißerscheinungen betroffen sein, beispielsweise eine Antriebseinheit der Türvorrichtung oder ein elektrisches Schloss. Es ist daher prinzipiell nötig, Türvorrichtungen zu warten, um Verschleißerscheinungen und Mängel festzustellen und zu beheben.

Bei aus dem Stand der Technik bekannten Systemen und Verfahren werden Wartungen meist in festen Zeitintervallen, beispielsweise einmal jährlich, oder anhand von vordefinierten Wartungsplänen durchgeführt. Hierdurch kommt es gemäß dem Stand der Technik einerseits zu unnötigen Wartungsarbeiten an Türvorrichtungen. Andererseits werden Verschleißerscheinungen häufig erst erkannt, wenn sie bereits zu Fehlern oder Störungen der Türvorrichtung geführt haben, was eine unerwünschte Ausfallzeit der Türvorrichtung nach sich zieht.

Eine Wartung ist dabei häufig aufwendig, da eine Fachkraft anreisen muss, um die Türvorrichtung zu untersuchen oder zu reparieren.

Vor diesem Hintergrund stellt sich die Aufgabe, eine effiziente Ermittlung und/oder Überprüfung eines Status eines Türsystems zu ermöglichen, sodass bevorzugt der Aufwand und die Kosten für Wartungsarbeiten und/oder die Ausfallzeiten reduziert werden können.

Die Aufgabe wird gelöst durch ein Verfahren zur Ermittlung und/oder Überprüfung eines Status eines Türsystems, wobei das Türsystem zumindest ein erstes Untersystem und ein zweites Untersystem aufweist,
wobei das Verfahren die folgenden Schritte umfasst:
-- in einem Messschritt wird mindestens eine Messinformation betreffend das Türsystem ermittelt,
-- in einem Statusermittlungsschritt wird mithilfe eines Modells sowie mithilfe der mindestens einen ermittelten Messinformation der Status des Türsystems ermittelt und/oder überprüft, wobei das Modell einen ersten Modellblock für das erste Untersystem und einen zweiten Modellblock für das zweite Untersystem aufweist.

Erfindungsgemäß kann hierdurch eine vorteilhafte Statusüberwachung erreicht werden, die eine verbesserte Planung für Wartungsarbeiten ermöglicht. Erfindungsgemäß ist es insbesondere möglich, eine effiziente vorrausschauende Wartung (predictive maintenance) für ein Türsystem zu erreichen. Das Modell weist dabei mindestens einen ersten und einen zweiten Modellblock auf. Vorzugsweise weist das Modell weitere Modellblöcke für weitere Untersysteme des Türsystems auf. Hierdurch kann eine vorteilhafte Zuordnung von Verschleißerscheinungen, die mithilfe des Modells in den Messinformationen betreffend das Türsystems identifizierbar sind, zu einem der Untersysteme, insbesondere zu dem ersten oder zweiten Untersystem, erfolgen. Es ist somit möglich, dass mithilfe des Modells ermittelt wird, bei welchem der Untersysteme des Türsystems ein Verschleiß vorliegt und/oder wie weit der Verschleiß fortgeschritten ist. Somit kann eine zeitoptimierte und individuelle Wartung erreicht werden. Insbesondere ist es möglich, dass ein Zeitpunkt einer nächsten Wartung in Abhängigkeit des ermittelten Status des Türsystems gewählt wird. Dabei kann ferner das Betriebsverhalten aus der Vergangenheit, welches in einem Speichermedium des Türsystems gespeichert werden kann, insbesondere Betriebszyklen pro Zeit, berücksichtigt werden. Beim Betriebsverhalten aus der Vergangenheit kann insbesondere ein Mittelwert der letzten Woche, des letzten Monats und/oder der letzten Monate herangezogen werden. Zusätzlich oder alternativ ist es möglich, dass die Wartung auf ein Untersystem oder mehrere Untersysteme des Türsystems fokussiert oder beschränkt wird, für das oder die bei der Ermittlung und/oder Überprüfung des Status des Türsystems mithilfe des Modells ein Verschleiß ermittelt wurde. Erfindungsgemäß kann somit eine besonders effiziente Wartung ermöglicht werden. Insbesondere können unnötige Wartungsarbeiten durch eine Fachkraft reduziert oder vermieden werden. Es können somit sowohl Ressourcen als auch Kosten gespart werden. Insbesondere kann ein derartiges Untersystem ein Bauteil oder eine Bauteilgruppe, wie ein Getriebe und/oder einen Motor und/oder eine elektronische Steuerung umfassen.

Der Begriff Getriebe beschreibt eine Baugruppe, welche eine Bewegung des Motors in eine Bewegung eines anderen Bauteils, insbesondere eines Abtriebs, wandelt. Das Übersetzungsverhältnis kann dabei beliebig, insbesondere auch 1:1, sein. Es kann vorteilhaft sein, dass einer, mehrere oder alle Schritte des Verfahrens wiederholt werden, insbesondere in regelmäßigen oder unregelmäßigen Abständen, oder dass einer, mehrere oder alle Schritte des Verfahrens kontinuierlich ausgeführt werden. Hierdurch kann für einen wählbaren Zeitraum eine Ermittlung und/oder Überprüfung eines Status eines Türsystems erreicht werden. Es ist denkbar, dass die Schritte des Verfahrens in verschiedenen Reihenfolgen ausgeführt werden. Es ist denkbar, dass sich die Schritte des Verfahrens zeitlich überschneiden.

Das erste Untersystem und das zweite Untersystem sind erfindungsgemäß insbesondere unterschiedliche Untersysteme (bzw. Teilsysteme) des Türsystems.

Gemäß einer Ausführungsform der vorliegenden Erfindung kann das Modell insbesondere ein Simulationsmodell sein. Gemäß einer Ausführungsform der vorliegenden Erfindung ist es vorzugsweise möglich, dass das Modell ein Simulationsmodell des Türsystems und/oder der Türvorrichtung ist, die das Türsystem aufweist.

Es ist denkbar, dass der Statusermittlungsschritt zur Ermittlung und/oder Überprüfung des Status des Türsystems eine Analyse der mindestens einen Messinformation mithilfe des Modells umfasst.

Das erfindungsgemäße Verfahren ist insbesondere ein computerimplementiertes Verfahren, bei dem ein, mehrere oder alle Schritte des Verfahrens computerimplementiert ausgeführt werden.

Es ist gemäß einer Ausführungsform der vorliegenden Erfindung in vorteilhafter Weise denkbar, dass für mehrere, insbesondere für jedes, in der Realität vorhandene Untersystem des Türsystems ein Modellblock definiert wird, dem ein bestimmtes Verhalten eingeprägt und/oder eine oder mehrere physikalische Eigenschaften als charakteristisch hinzufügt werden kann, beispielsweise Produktionstoleranzen, Maßabweichungen, und/oder Verschleißeffekte. Das Modell für das Türsystem wird vorzugsweise aus den einzelnen Untersystemen bzw. Modellblöcken, betreffend die Untersysteme, zusammengesetzt und ergibt in Summe charakteristische Modellinformationen. Besonders vorteilhaft spiegelt sich demnach jede physikalische Eigenschaft eines Modellblocks in den charakteristischen Modellinformationen wider. Es ist insbesondere möglich, dass sich durch gezielte Variation die Wirkung von jedem einzelnen Modellblock separat erkennen und/oder erlernen lässt. Es ist möglich, dass die durch das Modell erzeugten charakteristischen Modellinformationen, insbesondere eine Modellkurve, mit realen Messkurven, die beispielsweise mithilfe einer Messvorrichtung und/oder einer Steuerungsvorrichtung erhalten werden, verglichen werden kann. Hierdurch wird eine besonders vorteilhafte Ermittlung und/oder Überprüfung eines Status des Türsystems möglich, wobei besonders vorteilhaft Verschleißerscheinungen der einzelnen Untersysteme des Türsystems erkannt und/oder identifiziert werden können. Es kann somit festgestellt werden, für welches der Untersysteme des Türsystems ein Verschleiß vorliegt und/oder wie weit fortgeschritten der Verschleiß ist. Hierdurch kann in Abhängigkeit der Ermittlung und/oder Überprüfung des Status eine vorteilhafte Wartung durchgeführt werden.

Es ist gemäß einer Ausführungsform der vorliegenden Erfindung in vorteilhafter Weise denkbar, dass das Modell die Kinematik und/oder die Kinetik der Türvorrichtung, des Türsystems und/oder der Untersysteme des Türsystems berücksichtigt und/oder umfasst. Es ist bevorzugt denkbar, dass das Modell mechanische Wechselwirkungen, Massenträgheit und/oder mechanische Kräfte berücksichtigt und/oder umfasst. Es ist besonders vorteilhaft denkbar, dass das Modell alternativ oder zusätzlich elektrische Wechselwirkungen, Temperaturen und/oder Drücke berücksichtigt und/oder umfasst. Vorteilhafte Weiterbildungen und Ausgestaltungen der vorliegenden Erfindung können den abhängigen Ansprüchen entnommen werden.

Gemäß einer Ausführungsform der vorliegenden Erfindung ist es vorgesehen, dass der ermittelte und/oder überprüfte Status des Türsystems einen Verschleißstatus des ersten Untersystems und/oder einen Verschleißstatus des zweiten Untersystems und/oder einen Verschleißstatus des gesamten Türsystems betrifft oder umfasst. Hierdurch kann in vorteilhafter Weise ein Verschleißstatus bestimmt und/oder ausgegeben werden, mit dessen Hilfe eine vorrausschauende Wartung implementiert werden kann.

Gemäß einer Ausführungsform der vorliegenden Erfindung ist es vorgesehen, dass der erste Modellblock zumindest eine Eigenschaft des ersten Untersystems betrifft und dass der zweite Modellblock zumindest eine Eigenschaft des zweiten Untersystems betrifft. Darunter, dass der erste Modellblock zumindest eine Eigenschaft des ersten Untersystems betrifft kann gemäß einer Ausführungsform der vorliegenden Erfindung auch verstanden werden, dass dem ersten Modellblock ein bestimmtes Verhalten des ersten Untersystems eingeprägt wird und/oder dass der erste Modellblock eine oder mehrere physikalische Eigenschaften des ersten Untersystems aufweist, beispielsweise Produktionstoleranzen, Maßabweichungen, Bauteilgewicht und/oder Verschleißeffekte. Entsprechendes ist für jeden weiteren Modellblock und jedes zugehörige weitere Untersystem des Türsystems möglich. Somit kann gemäß einer Ausführungsform der vorliegenden Erfindung darunter, dass der zweite Modellblock zumindest eine Eigenschaft des zweiten Untersystems betrifft, verstanden werden, dass dem zweiten Modellblock ein bestimmtes Verhalten des zweiten Untersystems eingeprägt wird und/oder dass der zweiten Modellblock eine oder mehrere physikalische Eigenschaften des zweiten Untersystems aufweist, beispielsweise Produktionstoleranzen, Maßabweichungen, Bauteilgewicht und/oder Verschleißeffekte.

Gemäß einer Ausführungsform der vorliegenden Erfindung ist es vorgesehen, dass die mindestens eine Messinformation mithilfe einer Messung einer Messgröße des Türsystems durch eine Messvorrichtung ermittelt wird, und/oder
dass die mindestens eine Messinformation durch eine Einstellung und/oder Ermittlung einer Ansteuerungsgröße des Türsystems durch eine Steuerungsvorrichtung ermittelt wird. Die Ansteuerungsgröße kann auch als einstellbare Größe für das Türsystem verstanden werden, die beispielsweise beim Betrieb des Türsystems durch die Steuerungsvorrichtung ausgegeben und/oder eingestellt wird und mit der das Türsystem gesteuert wird. Für den Fall, dass das Türsystem eine Antriebseinheit der Türvorrichtung ist, kann es sich bei der Ansteuerungsgröße beispielsweise um eine Antriebsspannung und/oder einen oder mehrere Parameter einer Pulsweitenmodulation handeln. Die Messgröße kann auch als messbare Größe des Türsystems verstanden werden.

Gemäß einer Ausführungsform der vorliegenden Erfindung ist es vorgesehen,
-- dass das Modell mindestens eine Modellinformation, insbesondere eine Modellkurve, für die mindestens eine Messgröße und/oder Ansteuerungsgröße des Türsystems umfasst, und/oder
-- dass das Modell zur Ausgabe von mindestens einer Modellinformation, insbesondere zur Ausgabe einer Modellkurve, für die mindestens eine Messgröße und/oder Ansteuerungsgröße des Türsystems eingerichtet ist,
wobei der Statusermittlungsschritt zur Ermittlung und/oder Überprüfung des Status des Türsystems einen Abgleich der mindestens einen Messinformation mit der mindestens einen Modellinformation des Modells umfasst. Die mindestens eine Modellinformation kann insbesondere eine oder mehrere mithilfe des Modells erstellte Simulationsdaten betreffend das Türsystem umfassen.

Gemäß einer Ausführungsform der vorliegenden Erfindung ist es vorgesehen, dass das Modell derart eingerichtet ist, dass aus einer Änderung einer der Eigenschaften des ersten Untersystems und/oder eines Wertes einer der Eigenschaften des ersten Untersystems im ersten Modellblock eine Änderung des Modells und/oder eine Änderung der mindestens einen Modellinformation folgt. Es ist insbesondere möglich, gezielte Variationen der Eigenschaften der Modellblöcke durchzuführen und die Auswirkung auf die mithilfe des Modells erhaltenen Modellinformationen, insbesondere eine Modellkurve, zu identifizieren. Dies dient in vorteilhafter Weise dazu, eine sichere Zuordnung zwischen Verschleißerscheinungen der einzelnen Untersysteme des Türsystems und den Modellinformationen zu ermöglichen, die mit der Realität abgeglichen werden kann. Es ist denkbar, dass derart ein Teilbereich der Betriebsphase des Türsystems und/oder der Türvorrichtung identifiziert und/oder ermittelt wird, der durch eine Statusermittlungseinrichtung, und/oder Messvorrichtung und/oder Steuerungsvorrichtung gezielt überwacht und/oder vermessen wird.

Gemäß einer Ausführungsform der vorliegenden Erfindung ist es vorgesehen, dass mithilfe des Modells eine Abhängigkeit der mindestens einen Messinformation von mindestens einer Eigenschaft des ersten Untersystems ermittelt und/oder quantifiziert wird, und/oder
wobei mithilfe des Modells eine Abhängigkeit der mindestens einen Messinformation von einer Variation von mindestens einer Eigenschaft des ersten Untersystems ermittelt und/oder quantifiziert wird.
Es ist somit insbesondere denkbar, dass mithilfe des Modells die Abhängigkeit einer Messgröße und/oder Ansteuerungsgröße des Türsystems von mindestens einer Eigenschaft des ersten Untersystems simuliert wird, und/oder
wobei mithilfe des Modells die Abhängigkeit einer Messgröße und/oder Ansteuerungsgröße des Türsystems von einer Variation von mindestens einer Eigenschaft des ersten Untersystems simuliert wird. Entsprechendes ist für die weiteren Untersysteme bzw. weiteren Modellblöcke denkbar. Beispielsweise ist es möglich, dass mithilfe des Modells eine Abhängigkeit der mindestens einen Messinformation von mindestens einer Eigenschaft des zweiten Untersystems ermittelt und/oder quantifiziert wird, und/oder
dass mithilfe des Modells eine Abhängigkeit der mindestens einen Messinformation von einer Variation von mindestens einer Eigenschaft des zweiten Untersystems ermittelt und/oder quantifiziert wird.

Gemäß einer Ausführungsform der vorliegenden Erfindung ist es vorgesehen, dass mithilfe der ermittelten Abhängigkeit der mindestens einen Messinformation von der mindestens einen Eigenschaft des ersten Untersystems und/oder mithilfe der ermittelten Abhängigkeit der mindestens einen Messinformation von der Variation von der mindestens einen Eigenschaft des ersten Untersystems - insbesondere als Teil des Statusermittlungsschritts - eine Verschleißerscheinung und/oder ein Verschleißstatus des ersten Untersystems ermittelt wird. Entsprechendes ist für die weiteren Untersysteme bzw. weiteren Modellblöcke denkbar. Insbesondere ist es möglich, dass mithilfe der ermittelten Abhängigkeit der mindestens einen Messinformation von der mindestens einen Eigenschaft des zweiten Untersystems und/oder mithilfe der ermittelten Abhängigkeit der mindestens einen Messinformation von der Variation von der mindestens einen Eigenschaft des zweiten Untersystems - insbesondere als Teil des Statusermittlungsschritts - eine Verschleißerscheinung und/oder ein Verschleißstatus des zweiten Untersystems ermittelt wird.

Gemäß einer Ausführungsform der vorliegenden Erfindung ist es vorgesehen, dass in einem Prüfschritt des Modells - vorzugsweise vor dem Statusermittlungsschritt - eine Überprüfung und/oder ein Test des Modells mithilfe von einem oder mehreren Messwerten und/oder Ansteuerungswerten betreffend das Türsystem und/oder betreffend ein weiteres Türsystem durchgeführt wird, wobei bei der Überprüfung und/oder dem Test insbesondere überprüft wird, ob das Modell ein Genauigkeitskriterium erfüllt. Es wird dabei insbesondere überprüft, ob die Modelinformationen (bzw. Simulationsdaten) des Modells eine gewünschte Genauigkeit im Vergleich zu dem einen oder den mehreren Messwerten und/oder Ansteuerungswerten, die insbesondere mithilfe von realen Messungen und/oder realen Einstellungen an einem physischen bzw. realen Türsystem ermittelt werden, erreichen. Der Prüfschritt kann vor dem und/oder während des laufenden Betriebs des Türsystems und/oder der Türvorrichtung erfolgen.

Es ist gemäß einer bevorzugten Ausführungsform der vorliegenden Erfindung denkbar, dass, für den Fall, dass das Modell das Genauigkeitskriterium erfüllt, also eine gewünschte Genauigkeit erreicht ist, das Modell vorzugsweise im Statusermittlungsschritt zur Ermittlung und/oder Überprüfung des Status des Türsystems verwendet wird. Für den Fall, dass das Modell das Genauigkeitskriterium nicht erfüllt, also eine gewünschte Genauigkeit nicht erreicht ist, wird das Modell vorzugsweise angepasst und/oder geändert, insbesondere bis es das Genauigkeitskriterium erfüllt. Besonders bevorzugt wird das Modell erst nach Erfüllung des Genauigkeitskriteriums im Statusermittlungsschritt zur Ermittlung und/oder Überprüfung des Status des Türsystems verwendet. Das Genauigkeitskriterium ist insbesondere ein wählbares und/oder vorgebbares Kriterium.

Es ist gemäß einer Ausführungsform der vorliegenden Erfindung möglich, insbesondere für ein eine Antriebseinheit aufweisendes Türsystem mit einem Getriebe, dass das Modell einen Modellblock für das Getriebe aufweist. Das Getriebe ist meist mechanisch und kinematisch komplex, sodass hierbei Modellinformationen für die Trainingsdaten hilfreich sind.

Es ist gemäß einer Ausführungsform der vorliegenden Erfindung möglich, insbesondere für ein eine Antriebseinheit aufweisendes Türsystem mit einem Laschenwagen, dass das Modell einen Modellblock für den Laschenwagen aufweist. Der Laschenwagen wird insbesondere bei Drehtürantrieben eingesetzt, um mittelbar oder unmittelbar eine lineare Bewegung, insbesondere einer Feder, in Rotationsbewegung zu wandeln. Der Laschenwagen kann dabei ein Lager, insbesondere ein Nadellager umfassen. Ein solches Lager stellt in der Regel das höchst belastete Bauteil des Türsystems dar. Daher eignet sich der Laschenwagen sowohl als Modellblock als auch als Untersystem, insbesondere wobei Verschleißerscheinungen hiervon über den Motorstrom und/oder über PWM und/oder über Akustik, insbesondere den Körperschall, erkennbar sind.

Es ist gemäß einer Ausführungsform der vorliegenden Erfindung möglich, insbesondere für ein eine Antriebseinheit aufweisendes Türsystem, dass das Modell einen Modellblock für eine Tür bzw. einen Türflügel aufweist.

Es ist gemäß einer Ausführungsform der vorliegenden Erfindung möglich, insbesondere für ein eine Antriebseinheit aufweisendes Türsystem mit einem Motor, dass das Modell einen Modellblock für den Motor aufweist. Beim Motor treffen elektrische sowie mechanische Faktoren aufeinander, sodass hierbei Modellinformationen für die Trainingsdaten hilfreich sind.

Es ist gemäß einer Ausführungsform der vorliegenden Erfindung möglich, insbesondere für ein eine Antriebseinheit aufweisendes Türsystem mit einer elektronischen Steuerungseinrichtung, dass das Modell einen Modellblock für die elektronische Steuerungseinrichtung aufweist. Die Steuerungseinrichtung stellt einen geschlossenen Regelkreis sicher und eignet sich daher auch als Untersystem, insbesondere wobei an elektrischen Messgrößen wie Spannung und/oder Strom und/oder PWM Verschleißerscheinungen hiervon erkennbar sind.

Es ist gemäß einer Ausführungsform der vorliegenden Erfindung möglich, insbesondere für ein eine Antriebseinheit aufweisendes Türsystem mit einer Umlenkeinheit, dass das Modell einen Modellblock für die Umlenkeinheit, insbesondere eine Umlenkrolle und/oder einen Zahnriemen, aufweist. Die Umlenkeinheit ist in der Regel verschleißanfällig, insbesondere wegen der vielen Richtungswechsel der Bewegungen. Die Umlenkeinheit eignet sich daher auch als Untersystem, insbesondere wobei an Messinformationen betreffend Akustik, insbesondere Körperschall, den Stromverlauf und/oder PWM Verschleißerscheinungen hiervon erkennbar sind.

Es ist gemäß einer Ausführungsform der vorliegenden Erfindung möglich, insbesondere für ein eine Antriebseinheit aufweisendes Türsystem, dass das Modell einen Modellblock für einen Energiespeicher, insbesondere eine Feder oder ein Akku, aufweist.

Es ist gemäß einer Ausführungsform der vorliegenden Erfindung möglich, insbesondere für ein eine Antriebseinheit aufweisendes Türsystem mit einem Netzteil, dass das Modell einen Modellblock für das Netzteil aufweist. Das Netzteil kann Kondensatoren, welche nach gewisser Zeit verschleißen und bei hoher elektrischer Last ausfallen können, umfassen. Daher eignet sich das Netzteil auch als Untersystem, insbesondere wobei an Messinformationen betreffend die Spannung Verschleißerscheinungen hiervon erkennbar sind.

Es ist gemäß einer Ausführungsform der vorliegenden Erfindung möglich, insbesondere für ein eine Antriebseinheit aufweisendes Türsystem, dass das Modell einen Modellblock für ein Kraftübertragungselement, beispielsweise einen Zahnriemen, aufweist. Insbesondere kommt ein solches Element bei Schiebetüren zum Einsatz und unterfällt einem Gewebe-Abrieb. Verschleißerscheinungen sind dabei vorteilhaft an Messinformationen betreffend Akustik, insbesondere Körperschall, Positionsverlauf und/oder Stromverlauf erkennbar.

Gemäß einem Ausführungsbeispiel der vorliegenden Erfindung ist es denkbar, dass das Modell für ein Türsystem, das eine Antriebseinheit einer Türvorrichtung aufweist, einen, mehrere oder alle der folgenden Modellblöcke umfasst:
- einen ersten Modellblock, betreffend ein Getriebe,
- einen zweiten Modellblock, betreffend einen Laschenwagen,
- einen dritten Modellblock, betreffend eine Tür,
- einen vierten Modellblock, betreffend einen Motor,
- einen fünften Modellblock, betreffend eine elektronische Steuerung,
- einen sechsten Modellblock, betreffend eine Umlenkeinheit, insbesondere eine Umlenkrolle und/oder einen Zahnriemen.
- einen siebten Modellblock, betreffend einen Energiespeicher, insbesondere eine Feder,
- einen achten Modellblock, betreffend ein Netzteil,
- einen neunten Modellblock, betreffend ein Kraftübertragungselement, beispielsweise einen Zahnriemen.

Gemäß einer Ausführungsform der vorliegenden Erfindung ist es vorgesehen,
-- dass mithilfe des Modells ein Teilbereich einer Betriebsphase des Türsystems bestimmt wird, in dem eine Verschleißerscheinung des ersten Untersystems und/oder des zweiten Untersystems und/oder des Türsystems mithilfe einer Ermittlung der mindestens einen Messinformation, insbesondere mithilfe der Ermittlung mindestens einer Messgröße und/oder Ansteuerungsgröße, bestimmbar ist; und/oder
-- dass mithilfe eines künstliche Intelligenz-Systems ein Teilbereich einer Betriebsphase des Türsystems bestimmt wird, in dem eine Verschleißerscheinung des ersten Untersystems und/oder des zweiten Untersystems und/oder des Türsystems mithilfe einer Ermittlung der mindestens einen Messinformation, insbesondere mithilfe der Ermittlung mindestens einer Messgröße und/oder Ansteuerungsgröße, bestimmbar ist. Dies kann auch derart verstanden werden, dass das Modell und/oder das künstliche Intelligenz-System eine Teilbereichsinformation erzeugt, die einen Teilbereich einer Betriebsphase des Türsystems angibt, der dazu geeignet ist, eine Verschleißerscheinung des ersten Untersystems und/oder des zweiten Untersystems und/oder des Türsystems durch eine Überwachung einer Messgröße und/oder Ansteuerungsgröße des Türsystems in diesem Teilbereich zu ermitteln. Somit kann vorzugsweise ein Teilbereich einer Betriebsphase des Türsystems ermittelt werden, dessen Überwachung im Betrieb des Türsystems besonders vorteilhaft ist, da sich in diesem Teilbereich Verschleißerscheinungen des Türsystems in einer Messgröße und/oder Ansteuerungsgröße des Türsystems bemerkbar machen. Der Teilbereich kann dabei einen zusammenhängenden Bereich oder zwei oder mehr separate und beabstandete Bereiche der Betriebsphase umfassen.

Gemäß einer Ausführungsform der vorliegenden Erfindung ist es vorgesehen, dass die Betriebsphase des Türsystems einen Öffnungsvorgang und/oder einen Schließvorgang des Türsystems und/oder einer das Türsystem aufweisenden Türvorrichtung umfasst, wobei der Teilbereich der Betriebsphase lediglich ein Teilbereich des Öffnungsvorgangs und/oder des Schließvorgangs ist. Der Öffnungsvorgang kann auch als Öffnungsfahrt verstanden werden. Der Schließvorgang kann auch als Schließfahrt verstanden werden. Bei einer Karusselltür und/oder einer drehbaren Vereinzelungsvorrichtung kann beispielsweise eine vollständige Drehung des Türelements bzw. der Vereinzelungsvorrichtung als ein abgeschlossener Öffnungs- und Schließvorgang verstanden werden.

Gemäß einer Ausführungsform der vorliegenden Erfindung ist es vorgesehen, dass die im Statusermittlungsschritt zur Ermittlung und/oder Überprüfung des Status des Türsystems verwendete mindestens eine Messinformation lediglich den Teilbereich der Betriebsphase des Türsystems betrifft. Es ist gemäß einer Ausführungsform der vorliegenden Erfindung möglich, dass die Messinformation durch eine numerische Integration von in dem Teilbereich ermittelten Messwerten, betreffend mindestens eine Messgröße, und/oder Ansteuerungswerten, betreffend mindestens eine Ansteuerungsgröße, gebildet ist.

Gemäß einer Ausführungsform der vorliegenden Erfindung ist es vorgesehen, dass die mindestens eine Messinformation lediglich während des Teilbereichs der Betriebsphase des Türsystems ermittelt wird. Vorzugsweise wird die Messinformation somit derart ermittelt, dass die Messgröße des Türsystems durch die Messvorrichtung zur Erzeugung der mindestens einen Messinformation lediglich in dem Teilbereich gemessen wird. Alternativ oder zusätzlich wird die Messinformation somit vorzugsweise derart ermittelt, dass die Ansteuerungsgröße des Türsystems durch die Steuerungsvorrichtung zur Erzeugung der mindestens einen Messinformation lediglich in dem Teilbereich ermittelt wird. Insbesondere ist es hierdurch denkbar, dass die Messinformation während zumindest eines weiteren Teilbereichs der Betriebsphase nicht ermittelt wird oder dass die Messinformation während der gesamten Betriebsphase außerhalb des Teilbereichs nicht ermittelt wird. Hierdurch können Kosten und Energie gespart werden und die Menge an erzeugten Daten geringgehalten werden.

Gemäß einer Ausführungsform der vorliegenden Erfindung ist es vorgesehen, dass während eines weiteren Teilbereichs der Betriebsphase des Türsystems eine weitere Messinformation, insbesondere betreffend die gleiche Messgröße und/oder Ansteuerungsgröße wie die Messinformation, ermittelt wird,
wobei die Ermittlung und/oder Überprüfung des Status des Türsystems, insbesondere im Statusermittlungsschritt, unabhängig von der weiteren Messinformation ist, und/oder wobei die weitere Messinformation bei der Ermittlung und/oder Überprüfung des Status des Türsystems, insbesondere im Statusermittlungsschritt, unberücksichtigt bleibt. Es ist somit denkbar, dass die weitere Messinformation keinen Einfluss auf die Ermittlung und/oder Überwachung des Status des Türsystems hat. Es ist somit denkbar, dass Messinformationen betreffend die Messgröße und/oder Ansteuerungsgröße während der gesamten Betriebsphase des Türsystems ermittelt werden, insbesondere indem während der gesamten Betriebsphase des Türsystems eine Messgröße ermittelt und/oder eine Ansteuerungsgröße eingestellt und/oder ermittelt wird, wobei lediglich der während des Teilbereichs der Betriebsphase ermittelte Teil der Messinformationen, also insbesondere die mindestens eine Messinformation, zur Ermittlung und/oder Überwachung des Status des Türsystems verwendet wird. Außerhalb des relevanten Teilbereichs ermittelte Messinformationen können somit besonders vorteilhaft bei der Statusermittlung unberücksichtigt bleiben.

Gemäß einer Ausführungsform der vorliegenden Erfindung ist es vorgesehen, dass der Teilbereich einen oder mehrere der folgenden Bereiche umfasst:
- einen Beschleunigungsbereich und/oder einen Bremsbereich, insbesondere bei einem Öffnungsvorgang und/oder einem Schließvorgang einer das Türsystem aufweisenden Türvorrichtung,
- eine Konstantfahrt der das Türsystem aufweisenden Türvorrichtung, wobei die Türvorrichtung bevorzugt bei der Konstantfahrt eine zumindest annähernd konstante Geschwindigkeit aufweist,
- einen Anfahrtbereich der das Türsystem aufweisenden Türvorrichtung, insbesondere aus einem Stand heraus,
- einen Übergangsbereich zwischen einem Beschleunigungsbereich und einer Konstantfahrt,
- einen Übergangsbereich zwischen einem Beschleunigungsbereich und einem Bremsbereich,
- einen Übergangsbereich zwischen einer Konstantfahrt und einem Bremsbereich.

Gemäß einer Ausführungsform der vorliegenden Erfindung ist es möglich, dass der Teilbereich zumindest einen Beschleunigungsbereich und/oder einen Bremsbereich, insbesondere bei einem Öffnungsvorgang und/oder einem Schließvorgang einer das Türsystem aufweisenden Türvorrichtung, umfasst.

Gemäß einer Ausführungsform der vorliegenden Erfindung ist es möglich, dass der Teilbereich zumindest eine Konstantfahrt der das Türsystem aufweisenden Türvorrichtung umfasst, wobei die Türvorrichtung bevorzugt bei der Konstantfahrt eine zumindest annähernd konstante Geschwindigkeit aufweist.

Gemäß einer Ausführungsform der vorliegenden Erfindung ist es möglich, dass der Teilbereich zumindest einen Anfahrtbereich der das Türsystem aufweisenden Türvorrichtung, insbesondere aus einem Stand heraus, umfasst.

Gemäß einer Ausführungsform der vorliegenden Erfindung ist es möglich, dass der Teilbereich zumindest einen Übergangsbereich zwischen einem Beschleunigungsbereich und einer Konstantfahrt umfasst.

Gemäß einer Ausführungsform der vorliegenden Erfindung ist es möglich, dass der Teilbereich zumindest einen Übergangsbereich zwischen einem Beschleunigungsbereich und einem Bremsbereich umfasst.

Gemäß einer Ausführungsform der vorliegenden Erfindung ist es möglich, dass der Teilbereich zumindest einen Übergangsbereich zwischen einer Konstantfahrt und einem Bremsbereich umfasst.

Gemäß einer Ausführungsform der vorliegenden Erfindung ist es vorgesehen, dass der Teilbereich einen oder mehrere Bereiche umfasst, in denen sich eine Beschleunigung und/oder ein Vorzeichen einer Beschleunigung und/oder eine Bewegungsrichtung der Türvorrichtung und/oder des Türsystems ändert. Für ein als Antriebseinheit einer Türvorrichtung ausgebildetes Türsystem ist es beispielsweise besonders vorteilhaft möglich, dass ein Verschleiß der Antriebseinheit oder eines Untersystems der Antriebseinheit, beispielsweise eines Getriebes, in einem oder mehreren Teilbereichen erkennbar ist, in denen sich die Beschleunigung und/oder das Vorzeichen der Beschleunigung und/oder die Bewegungsrichtung der Türvorrichtung ändert. Hierunter fallen insbesondere ein Beschleunigungsbereich, und/oder ein Bremsbereich, und/oder ein Anfahrtbereich, und/oder ein Übergangsbereich zwischen einem Beschleunigungsbereich und einer Konstantfahrt, und/oder ein Übergangsbereich zwischen einem Beschleunigungsbereich und einem Bremsbereich, und/oder ein Übergangsbereich zwischen einer Konstantfahrt und einem Bremsbereich. Insbesondere ist ein Verschleiß besonders vorteilhaft in solchen Teilbereichen erkennbar, in denen Massenträgheitskräfte wirken. Besonders bevorzugt ist es dabei denkbar, dass die ermittelte mindestens eine Messinformation einen Körperschall, eine Geschwindigkeit eines bewegten Teils des Motors und/oder des Getriebes, insbesondere eine Winkelgeschwindigkeit des Motors, insbesondere eines Rotors, und/oder Getriebes, insbesondere eines Getrieberads, und/oder einen Strom und/oder eine Stellspannung des Motors der Antriebseinheit betrifft. Anhand derartiger Messinformationen ist dabei eine besonders vorteilhafte Ermittlung von Verschleißerscheinungen möglich.

Üblicherweise kann ein Motor einen nicht bewegten Teil in Form eines Stators und den bewegten Teil, insbesondere bei Ausführung als Rotationsmotor in Form eines Rotors, umfassen.

Gemäß einer Ausführungsform der vorliegenden Erfindung ist es für ein als Antriebseinheit ausgebildetes Türsystem einer Türvorrichtung, die keine Feder und/oder keinen Energiespeicher aufweist, beispielsweise einer Schiebetür, in vorteilhafter Weise denkbar, dass der Teilbereich einen Umkehrbereich zwischen einer Öffnungsfahrt und einer Schließfahrt, und/oder einen Umkehrbereich zwischen einer Schließfahrt und einer Öffnungsfahrt, und/oder ein Umkehrbereich zwischen einer Links-Fahrt und einer Rechts-Fahrt, und/oder ein Umkehrbereich zwischen einer Rechts-Fahrt und einer Links-Fahrt umfasst. Ein solcher Umkehrbereich ist besonders geeignet, um einen Verschleiß des Türsystems oder eines Untersystems des Türsystems, beispielsweise eines Getriebes, zu ermitteln. Ein solcher Umkehrbereich kann gemäß einer Ausführungsform der vorliegenden Erfindung auch als ein aus einem Bremsbereich und einem Anfahrtbereich zusammengesetzter Teilbereich verstanden werden. Es ist insbesondere denkbar, dass das Umkehrspiel in einem solchen Umkehrbereich proportional zum Verschleiß des Türsystems oder des Untersystems des Türsystems ist. Besonders bevorzugt ist es dabei denkbar, dass die ermittelte mindestens eine Messinformation oder die ermittelten Messinformationen eine Geschwindigkeit eines bewegten Teils des Motors und/oder des Getriebes, insbesondere eine Winkelgeschwindigkeit eines Rotors des Motors und/oder eines Getrieberads des Getriebes, und/oder einen Strom und/oder eine Stellspannung des Motors der Antriebseinheit betrifft. Anhand derartiger Messinformationen ist dabei eine besonders vorteilhafte Ermittlung von Verschleißerscheinungen möglich.

Gemäß einer Ausführungsform der vorliegenden Erfindung ist es vorgesehen, dass das Türsystem ein Teilsystem einer Türvorrichtung ist, wobei das Türsystem insbesondere eine Antriebseinheit der Türvorrichtung ist oder eine Antriebseinheit der Türvorrichtung umfasst. Alternativ ist es beispielsweise denkbar, dass das Türsystem ein elektrisches Schloss einer Türvorrichtung umfasst oder ist. Auch andere Teilsysteme einer Türvorrichtung kommen für das Türsystem infrage. Es ist alternativ denkbar, dass das Türsystem eine vollständige Türvorrichtung ist.

Gemäß einer Ausführungsform der vorliegenden Erfindung ist die Türvorrichtung eine Zutrittsvorrichtung, beispielsweise für ein Areal oder ein Gebäude. Es ist vorzugsweise denkbar, dass die Türvorrichtung eine automatische Türvorrichtung ist. Es ist denkbar, dass die Türvorrichtung eine oder mehrere der folgenden Vorrichtungen umfasst:
- eine Drehtür,
- eine Drehflügeltür,
- eine Karusselltür,
- eine Sicherheitskarusselltür,
- eine Personenschleuse,
- eine Schiebetür,
- eine Faltschiebetür,
- eine Drehsperre,
- ein Drehkreuz,
- eine Schwenktür.

Gemäß einer Ausführungsform der vorliegenden Erfindung ist es vorgesehen, dass die Ermittlung und/oder Überprüfung des Status des Türsystems im Statusermittlungsschritt mithilfe eines künstliche Intelligenz-Systems durchgeführt wird. Es ist insbesondere denkbar, dass das künstliche Intelligenz-Systems die mindestens eine Messinformation im Statusermittlungsschritt analysiert. Es kann somit mithilfe des künstliche Intelligenz-Systems insbesondere ermittelt werden, ob ein Verschleiß des Türsystems und/oder eines Untersystems des Türsystems vorliegt und/oder wie weit der Verschleiß fortgeschritten ist. Somit kann eine zeitoptimierte und individuelle Wartung erreicht werden. Insbesondere ist es möglich, dass ein Zeitpunkt einer nächsten Wartung in Abhängigkeit des ermittelten Status des Türsystems gewählt wird. Dabei kann ferner das Betriebsverhalten aus der Vergangenheit, welches in einem Speichermedium des Türsystems gespeichert werden kann, insbesondere Betriebszyklen pro Zeit, berücksichtigt werden. Beim Betriebsverhalten aus der Vergangenheit kann insbesondere ein Mittelwert der letzten Woche, des letzten Monats und/oder der letzten Monate herangezogen werden. Zusätzlich oder alternativ ist es möglich, dass die Wartung auf das Untersystem oder die Untersysteme des Türsystems fokussiert oder beschränkt wird, für das oder die bei der Ermittlung und/oder Überprüfung des Status des Türsystems mithilfe des künstliche Intelligenz-Systems ein Verschleiß ermittelt wurde.

Gemäß einer Ausführungsform der vorliegenden Erfindung ist es vorgesehen, dass das künstliche Intelligenz-System mithilfe von Trainingsdaten trainiert wird, insbesondere zumindest teilweise in einer Trainingsphase vor dem Statusermittlungsschritt. Es ist denkbar, dass die Trainingsphase vollständig vor dem Statusermittlungsschritt durchgeführt wird. Es ist alternativ denkbar, dass auch im Betrieb des Türsystems, beispielsweise vor, während und/oder nach einem Statusermittlungsschritt, Trainingsdaten verwendet werden, um das künstliche Intelligenz-System weiter zu trainieren. Somit ist auch eine Anpassung und/oder Optimierung des künstliche Intelligenz-Systems möglich während das Türsystem bereits im Betrieb ist und/oder während der Status des Türsystems bereits ermittelt und/oder überprüft wird.

Gemäß einer Ausführungsform der vorliegenden Erfindung ist es vorgesehen, dass die Trainingsdaten mindestens eine mithilfe eines Modells ermittelte und/oder ausgegebene Modellinformation, insbesondere eine Modellkurve, umfassen. Hierdurch ist es besonders vorteilhaft möglich, die nötige Menge an Trainingsdaten, die mithilfe von Messungen und/oder Prüfverfahren an realen Türsystemen und Türvorrichtungen erhalten werden, zu verringern. Türsysteme und Türvorrichtungen sind häufig individuell an bestimmte Anwendungsbedingungen angepasst, so dass identische Türvorrichtungen und/oder Türsysteme in vielen Fällen allenfalls in sehr geringer Stückzahl produziert werden. Das Training eines künstliche Intelligenz-Systems mithilfe von Trainingsdaten, die durch Messungen und/oder Prüfungen an realen Türsystemen und/oder Türvorrichtungen erhalten wurden, ist daher häufig sehr umständlich und kostspielig, da hierfür typischerweise eine Vielzahl an Daten an baugleichen oder sehr ähnlichen Türvorrichtungen aufgenommen werden müssten. Dadurch, dass die Trainingsdaten Modellinformationen umfassen, die mithilfe eines Modells, insbesondere eines Simulationsmodells, erzeugt wurden, kann der Prüfaufwand an realen Türsystemen zum Training des künstliche Intelligenz-Systems daher besonders vorteilhaft verringert werden. Somit wird eine vorteilhafte Verwendung eines künstliche Intelligenz-Systems auch für Türvorrichtungen und Türsysteme möglich, die individuell angefertigt oder an ihre Anwendung angepasst sind oder die lediglich in eher geringer Stückzahl gefertigt werden.

Besonders vorteilhaft ist es gemäß einer Ausführungsform der vorliegenden Erfindung denkbar, dass das künstliche Intelligenz-System nach der Trainingsphase derart konfiguriert ist, dass auftretende Verschleißerscheinungen, also insbesondere Anomalien und/oder Defekte, des Türsystems und/oder eines Untersystems des Türsystems in den Messinformationen von dem künstliche Intelligenz-System erkennbar sind. Insbesondere ist es hierdurch möglich, dass Verschleißerscheinungen mithilfe einer durch das künstliche Intelligenz-System durchgeführten Mustererkennung betreffend die im Betrieb des Türsystems ermittelten Messinformationen sicher erkannt werden.

Es ist gemäß einer Ausführungsform der vorliegenden Erfindung denkbar, dass die Trainingsdaten Trainingsmessinformationen betreffend das Türsystem und/oder betreffend eine das Türsystem umfassende Türvorrichtung umfassen, und/oder dass die Trainingsdaten Trainingsmessinformationen betreffend ein weiteres Türsystem und/oder eine das weitere Türsystem umfassende weitere Türvorrichtung umfassen. Die Trainingsmessinformationen werden insbesondere durch Messung von einer oder mehreren Messgrößen mithilfe von entsprechenden Messvorrichtungen an dem Türsystem, und/oder der Türvorrichtung, und/oder einem oder mehreren weiteren Türsystemen und/oder einer oder mehreren weiteren Türvorrichtungen ermittelt. Zusätzlich oder alternativ werden die Trainingsmessinformationen insbesondere durch eine Ermittlung von einer oder mehreren Ansteuerungsgrößen mithilfe von entsprechenden Steuerungsvorrichtungen an dem Türsystem, und/oder der Türvorrichtung, und/oder einem oder mehreren weiteren Türsystemen und/oder einer oder mehreren weiteren Türvorrichtungen ermittelt. Es ist denkbar, dass die Trainingsmessinformationen teilweise oder vollständig in einer gesonderten Prüfphase des Türsystems, und/oder der Türvorrichtung, und/oder des einen oder der mehreren weiteren Türsysteme und/oder der einen oder der mehreren weiteren Türvorrichtungen ermittelt werden. Es ist denkbar, dass die Trainingsmessinformationen teilweise oder vollständig im Betrieb bzw. in der Anwendung insbesondere bei einer Statusermittlung des Türsystems, und/oder der Türvorrichtung, und/oder des einen oder der mehreren weiteren Türsysteme und/oder der einen oder der mehreren weiteren Türvorrichtungen ermittelt werden.

Es ist gemäß einer Ausführungsform der vorliegenden Erfindung insbesondere denkbar, dass die Trainingsdaten sowohl Modellinformationen als auch Trainingsmessinformationen umfassen.

Gemäß einer Ausführungsform der vorliegenden Erfindung ist es vorgesehen, dass die Trainingsdaten Normalbetriebsdaten aufweisen, insbesondere wobei die Normalbetriebsdaten einen verschleißfreien Zustand des Türsystems betreffen, und
dass die Trainingsdaten Verschleißbetriebsdaten aufweisen, insbesondere wobei die Verschleißbetriebsdaten einen Verschleißzustand des Türsystems und/oder einen Verschleißzustand eines Untersystems des Türsystems betreffen. Es ist besonders vorteilhaft möglich, dass das künstliche Intelligenz-System zur Erkennung von Verschleißerscheinungen von einem oder mehreren Untersystemen des Türsystems in der mindestens einen Messinformationen trainiert wird. Es ist somit möglich, dass das künstliche Intelligenz-System, insbesondere im Statusermittlungsschritt, eine Zuordnung von einer in der mindestens einen Messinformation ermittelten Verschleißerscheinung zu einem bestimmten Untersystem des Türsystems durchführt. Somit kann die Ermittlung des Status des Türsystems, insbesondere im Statusermittlungsschritt, vorzugsweise umfassen, dass der Verschleißstatus von einem oder mehreren Untersystemen des Türsystems ermittelt und/oder ausgegeben wird. Die Normalbetriebsdaten sind insbesondere Modellinformationen und/oder Trainingsmessinformationen. Es ist besonders bevorzugt, dass die Normalbetriebsdaten zumindest Modellinformationen umfassen. Die Verschleißbetriebsdaten sind insbesondere Modellinformationen und/oder Trainingsmessinformationen. Es ist besonders bevorzugt, dass die Verschleißbetriebsdaten zumindest Modellinformationen umfassen.

Gemäß einer Ausführungsform der vorliegenden Erfindung ist es möglich, dass bei der Ermittlung der mindestens einen Messinformation bzw. der Messinformationen statistische und/oder stochastische Methoden angewandt werden. Es ist denkbar, dass die mindestens eine Messinformation einen Integralwert umfasst. Es ist denkbar, dass der Integralwert mithilfe einer numerischen Integration ermittelt ist.

Gemäß einer Ausführungsform der vorliegenden Erfindung ist es möglich, dass bei der Ermittlung und/oder Überprüfung des Status des Türsystems im Statusermittlungsschritt statistische und/oder stochastische Methoden angewandt werden.

Es ist gemäß einer Ausführungsform der vorliegenden Erfindung denkbar, dass die Messinformation im Messschritt derart ermittelt wird, dass mehrere Messwerte betreffend mindestens eine Messgröße und/oder mehrere Messwerte betreffend mindestens eine Ansteuerungsgröße während einer Betriebsphase des Türsystems oder lediglich während eines Teilbereichs einer Betriebsphase des Türsystems ermittelt werden. Für die während der Betriebsphase oder des Teilbereichs der Betriebsphase ermittelten Messwerte wird ein Flächenintegral mithilfe einer numerischen Integration gebildet. Die ermittelte Messinformation umfasst vorzugsweise das derart ermittelte Flächenintegral. Es sind alternativ oder zusätzlich auch andere statische und/oder numerische Methoden bei der Ermittlung der Messinformation denkbar, beispielsweise eine Ableitung, eine Bildung eines Mittelwerts, eine Bildung einer Varianz und/oder Standardabweichung.

Erfindungsgemäß ist es in vorteilhafter Weise denkbar, dass - mithilfe und/oder in Abhängigkeit des im Statusermittlungsschritt ermittelten und/oder überprüften Status - eine Wartungsindikation betreffend das Türsystem und/oder betreffend eines oder mehrere der Untersysteme des Türsystems ausgegeben wird und/oder eine Wartung des Türsystems und/oder eines oder mehrerer der Untersysteme des Türsystems durchgeführt wird. Die Wartungsindikation ist insbesondere eine Information, die angibt, ob eine Wartung des Türsystems durchzuführen ist und/oder wann eine Wartung der Türvorrichtung und/oder des Türsystems durchzuführen ist. Die Wartungsindikation wird vorzugsweise an eine Wartungseinrichtung übermittelt und/oder einer Wartungsperson zur Verfügung gestellt.

Es ist gemäß einer Ausführungsform der vorliegenden Erfindung denkbar, dass im Statusermittlungsschritt vorzugsweise mehrere Messinformationen zur Ermittlung und/oder Überprüfung des Status des Türsystems verwendet werden. Die Messinformationen umfassen insbesondere Betriebs- und/oder Sensordaten betreffend das Türsystem und/oder die Türvorrichtung. Erfindungsgemäß ist es somit denkbar, dass - insbesondere im Statusermittlungsschritt - eine vorteilhafte Extraktion von charakteristischen Verschleiß- und/oder Schadens-Merkmalen aus den Betriebs-und/oder Sensordaten durch ein Modell unter optionaler Zuhilfenahme von Machine-Learning-Algorithmen und/oder statistischen und/oder stochastischen Methoden erfolgt (beispielsweise mithilfe einer Korrelation zwischen Betriebsparametern und Anomalien).

Gemäß einer Ausführungsform der vorliegenden Erfindung ist es vorgesehen, dass die mindestens eine Messinformation einen oder mehrere:
- Positionsverläufe,
- Geschwindigkeitsverläufe,
- Beschleunigungsverläufe,
- Motor-Ansteuerungsverläufe, insbesondere eine Pulsweitenmodulation,
- Stromverläufe, insbesondere eines Motor- und/oder Gesamtstroms,
- Spannungsverläufe, insbesondere einer Netzteilspannung und/oder Motorspannung,
- Temperaturverläufe, insbesondere einer Temperatur einer Umgebung, eines Motors, eines Netzteils und/oder von einem oder mehreren elektrischen Bauteilen,
- Vibrationsverläufe, insbesondere Akustik, bevorzugt einen Körperschallverlauf,
betrifft oder umfasst.

Gemäß einer Ausführungsform der vorliegenden Erfindung ist es denkbar, dass die mindestens eine Messinformation mindestens einen Positionsverlauf betrifft und/oder umfasst.

Gemäß einer Ausführungsform der vorliegenden Erfindung ist es denkbar, dass die mindestens eine Messinformation mindestens einen Geschwindigkeitsverlauf betrifft oder umfasst.

Gemäß einer Ausführungsform der vorliegenden Erfindung ist es denkbar, dass die mindestens eine Messinformation mindestens einen Beschleunigungsverlauf betrifft oder umfasst.

Für ein als Antriebseinheit ausgebildetes Türsystem ist es gemäß einer Ausführungsform der vorliegenden Erfindung besonders vorteilhaft möglich, dass die mindestens eine Messinformation Akustik, insbesondere Körperschall, eine Geschwindigkeit, Position und/oder Beschleunigung eines bewegten Teils des Motors und/oder des Getriebes umfasst. Insbesondere kann es dabei eine Winkelgeschwindigkeit, Winkelposition und/oder Winkelbeschleunigung eines Rotors eines Motors und/oder eines Getrieberads des Getriebes sein. Derartige Messinformationen sind besonders geeignet, um einen Verschleiß des Türsystems und/oder des Getriebes zu identifizieren.

Gemäß einer Ausführungsform der vorliegenden Erfindung ist es denkbar, dass die mindestens eine Messinformation mindestens einen Motor-Ansteuerungsverlauf, insbesondere eine Pulsweitenmodulation, betrifft oder umfasst. Für ein als Antriebseinheit ausgebildetes Türsystem ist es beispielsweise besonders vorteilhaft möglich, dass die mindestens eine Messinformation eine Pulsweitenmodulation des Motors der Antriebseinheit betrifft oder umfasst, da diese zur Ermittlung von Verschleißerscheinungen besonders geeignet ist.

Gemäß einer Ausführungsform der vorliegenden Erfindung ist es denkbar, dass die mindestens eine Messinformation mindestens einen Stromverlauf, insbesondere eines Motor- und/oder Gesamtstroms, betrifft oder umfasst. Für ein als Antriebseinheit ausgebildetes Türsystem ist es beispielsweise besonders vorteilhaft möglich, dass die mindestens eine Messinformation einen Motorstrom der Antriebseinheit betrifft oder umfasst. Der Motorstrom ist besonders geeignet, um einen Verschleiß des Türsystems und/oder eines Untersystems des Türsystems zu identifizieren.

Gemäß einer Ausführungsform der vorliegenden Erfindung ist es denkbar, dass die mindestens eine Messinformation mindestens einen Spannungsverlauf, insbesondere einer Netzteilspannung und/oder Motorspannung, betrifft oder umfasst. Für ein als Antriebseinheit ausgebildetes Türsystem ist es beispielsweise besonders vorteilhaft möglich, dass die mindestens eine Messinformation eine Stellspannung des Motors der Antriebseinheit betrifft oder umfasst, da diese zur Ermittlung von Verschleißerscheinungen besonders geeignet ist.

Gemäß einer Ausführungsform der vorliegenden Erfindung ist es denkbar, dass die mindestens eine Messinformation mindestens einen Temperaturverlauf, insbesondere einer Temperatur einer Umgebung, eines Motors, eines Netzteils und/oder von einem oder mehreren elektrischen Bauteilen, betrifft oder umfasst.

Gemäß einer Ausführungsform der vorliegenden Erfindung ist es denkbar, dass die mindestens eine Messinformation mindestens einen Vibrationsverlauf, insbesondere einen Körperschallverlauf, betrifft oder umfasst.

Gemäß einer Ausführungsform der vorliegenden Erfindung ist es, insbesondere für ein als Antriebseinheit ausgebildetes Türsystem, in vorteilhafter Weise möglich, dass die im Messschritt ermittelten Messinformationen einen Winkelgeschwindigkeitsverlauf eines Getriebes der Antriebseinheit gegen die Zeit und/oder gegen eine Position eines bewegten Teils des Motors oder des Getriebes, insbesondere gegen einen Winkel eines Rotors des Motors und/oder eines Getrieberads des Getriebes, betreffen oder umfassen. Verschließerscheinungen der Antriebseinheit und/oder eines Untersystems der Antriebseinheit, beispielswiese des Getriebes oder des Motors, sind mithilfe derartiger Messinformationen besonders vorteilhaft ermittelbar.

Gemäß einer Ausführungsform der vorliegenden Erfindung ist es, insbesondere für ein als Antriebseinheit ausgebildetes Türsystem, in vorteilhafter Weise möglich, dass die im Messschritt ermittelten Messinformationen einen Beschleunigungsverlauf eines bewegten Teils des Motors und/oder des Getriebes, insbesondere einen Winkelbeschleunigungsverlauf eines Rotors des Motors und/oder eines Getrieberads des Getriebes der Antriebseinheit, gegen die Zeit und/oder gegen eine Position eines bewegten Teils des Motors oder des Getriebes, insbesondere gegen einen Winkel eines Rotors des Motors oder eines Getrieberads des Getriebes, betreffen oder umfassen. Verschließerscheinungen der Antriebseinheit und/oder eines Untersystems der Antriebseinheit, beispielswiese des Getriebes oder des Motors, sind mithilfe derartiger Messinformationen besonders vorteilhaft ermittelbar.

Gemäß einer Ausführungsform der vorliegenden Erfindung ist es, insbesondere für ein als Antriebseinheit ausgebildetes Türsystem, in vorteilhafter Weise möglich, dass die im Messschritt ermittelten Messinformationen einen Motorstrom eines Motors der Antriebseinheit gegen die Zeit und/oder gegen eine Position eines bewegten Teils des Motors oder des Getriebes, insbesondere gegen einen Winkel eines Rotors des Motors oder eines Getrieberads des Getriebes, betreffen oder umfassen. Hierdurch ist eine besonders vorteilhafte Ermittlung von Verschließerscheinungen der Antriebseinheit und/oder eines Untersystems der Antriebseinheit möglich.

Gemäß einer Ausführungsform der vorliegenden Erfindung ist es, insbesondere für ein als Antriebseinheit ausgebildetes Türsystem, in vorteilhafter Weise möglich, dass die im Messschritt ermittelten Messinformationen eine Pulsweitenmodulation und/oder eine Stellspannung eines Motors der Antriebseinheit gegen die Zeit und/oder gegen eine Position eines bewegten Teils des Motors oder des Getriebes, insbesondere gegen einen Winkel eines Rotors des Motors oder eines Getrieberads des Getriebes, betreffen oder umfassen. Hierdurch ist eine besonders vorteilhafte Ermittlung von Verschließerscheinungen der Antriebseinheit und/oder eines Untersystems der Antriebseinheit möglich.

Es ist denkbar, dass dem Modell und/oder dem künstliche Intelligenz-System Parameter und/oder Größen des Türsystems und/oder der Türvorrichtung bereitgestellt werden, insbesondere auch solche Parameter und/oder Größen, die den Fertigungszustand des Türsystems und/oder der Türvorrichtung betreffen und vorzugsweise nicht verschleißbedingt sind. Alternativ oder zusätzlich ist es denkbar, dass das Modell und/oder das künstliche Intelligenzsystem derartige Parameter und/oder Größen des Türsystems und/oder der Türvorrichtung umfasst.
Gemäß einer Ausführungsform der vorliegenden Erfindung umfassen derartige Parameter und/oder Größen des Türsystems und/oder der Türvorrichtung beispielsweise einen oder mehrere der folgenden Parameter und/oder Größen:
- ein Gewicht des Türsystems und/oder der Türvorrichtung,
- Maße des Türsystems und/oder der Türvorrichtung, insbesondere Höhen und/oder Breiten,
- Toleranzen, insbesondere Fertigungstoleranzen, des Türsystems und/oder der Türvorrichtung,
- eine Einstellung der Betriebsparameter des Türsystems und/oder der Türvorrichtung,
- sonstige Besonderheiten des Türsystems und/oder der Türvorrichtung.

Gemäß einer bevorzugten Ausführungsform der vorliegenden Erfindung umfassen oder betreffen die Parameter und/oder Größen, die den Fertigungszustand des Türsystems und/oder der Türvorrichtung betreffen, zumindest ein Gewicht des Türsystems und/oder der Türvorrichtung.

Gemäß einer bevorzugten Ausführungsform der vorliegenden Erfindung umfassen oder betreffen die Parameter und/oder Größen, die den Fertigungszustand des Türsystems und/oder der Türvorrichtung betreffen, zumindest ein Maß des Türsystems und/oder der Türvorrichtung, insbesondere eine Höhe und/oder Breite.

Gemäß einer bevorzugten Ausführungsform der vorliegenden Erfindung umfassen oder betreffen die Parameter und/oder Größen, die den Fertigungszustand des Türsystems und/oder der Türvorrichtung betreffen, zumindest Toleranzen, insbesondere Fertigungstoleranzen, des Türsystems und/oder der Türvorrichtung.

Gemäß einer bevorzugten Ausführungsform der vorliegenden Erfindung umfassen oder betreffen die Parameter und/oder Größen, die den Fertigungszustand des Türsystems und/oder der Türvorrichtung betreffen, eine Einstellung der Betriebsparameter des Türsystems und/oder der Türvorrichtung.

Gemäß einer Ausführungsform der vorliegenden Erfindung ist es möglich, dass das künstliche Intelligenz-System ein Machine-Learning-System, ein Deep-Learning-System, ein neuronales Netz und/oder eine Musterkennung aufweist.

Ein weiterer Gegenstand der vorliegenden Erfindung ist ein Verfahren zur Erzeugung eines Modells, insbesondere zur Ermittlung und/oder Überprüfung eines Status eines Türsystems, wobei das Türsystem zumindest ein erstes Untersystem und ein zweites Untersystem aufweist,
wobei das Verfahren zur Erzeugung des Modells die folgenden Schritte umfasst:
-- Erzeugen eines ersten Modellblocks für das erste Untersystem und Erzeugen eines zweiten Modellblocks für das zweite Untersystem,
-- Bilden des Modells zumindest mithilfe des ersten Modellblocks und des zweiten Modellblocks.

Das Verfahren zur Erzeugung eines Modells ist insbesondere ein computerimplementiertes Verfahren. Das erzeugte Modell ist insbesondere als Modell in einem Verfahren zur Ermittlung und/oder Überprüfung eines Status eines Türsystems gemäß einer Ausführungsform der vorliegenden Erfindung verwendbar. Das Türsystem umfasst vorzugsweise mehrere Untersysteme, für die jeweils ein Modellblock erzeugt wird. Das Modell wird insbesondere mithilfe aller erzeugten Modellblöcke gebildet.

Ein weiterer Gegenstand der vorliegenden Erfindung ist eine Statusermittlungseinrichtung zur Ermittlung und/oder Überprüfung eines Status eines Türsystems, wobei das Türsystem zumindest ein erstes Untersystem und ein zweites Untersystem aufweist,
- wobei die Statusermittlungseinrichtung zum Erhalten mindestens einer ermittelten Messinformation betreffend das Türsystem konfiguriert ist,
- wobei die Statusermittlungseinrichtung zur Ermittlung und/oder Überprüfung des Status des Türsystems mithilfe eines Modells sowie mithilfe der mindestens einen ermittelten Messinformation konfiguriert ist, wobei das Modell einen ersten Modellblock für das erste Untersystem und einen zweiten Modellblock für das zweite Untersystem aufweist.

Die Statusermittlungseinrichtung ist vorzugsweise eine computerimplementierte Statusermittlungseinrichtung.

Die Statusermittlungseinrichtung umfasst vorzugsweise Mittel, die zur Ausführung eines Verfahrens zur Ermittlung und/oder Überprüfung eines Status eines Türsystems gemäß einer Ausführungsform der vorliegenden Erfindung eingerichtet sind. Es ist denkbar, dass die Statusermittlungseinrichtung teilweise oder vollständig als Teil der Türvorrichtung ausgebildet ist, die das Türsystem aufweist. Es ist denkbar, dass die Statusermittlungseinrichtung teilweise oder vollständig als Teil des Türsystems ausgebildet ist. Es ist alternativ oder zusätzlich denkbar, dass die Statusermittlungseinrichtung teilweise oder vollständig extern von der Türvorrichtung ausgebildet ist. Es ist beispielsweise denkbar, dass die Statusermittlungseinrichtung mithilfe einer Cloud ausgebildet ist.

Es ist denkbar, dass die Statusermittlungseinrichtung mit der Türvorrichtung und/oder dem Türsystem und/oder der Messvorrichtung und/oder der Steuerungsvorrichtung in Kommunikationsverbindung steht, insbesondere mithilfe von Kommunikationsmitteln. Es ist denkbar, dass die Kommunikationsmittel zur drahtlosen und/oder drahtgebundenen Informations- und/oder Signalübertragung ausgebildet sind. Es ist denkbar, dass die Kommunikationsmittel Mittel zur Informations- und/oder Signalübertragung zwischen der Statusermittlungseinrichtung und der Türvorrichtung und/oder zwischen der Statusermittlungseinrichtung und dem Türsystem und/oder zwischen der Statusermittlungseinrichtung und der Messvorrichtung und/oder zwischen der Statusermittlungseinrichtung und der Steuerungsvorrichtung umfassen.

Es ist gemäß einer Ausführungsform der vorliegenden Erfindung möglich, dass die Statusermittlungseinrichtung teilweise oder vollständig durch ein Edge-Gerät (Edge Device) ausgebildet ist. Das Edge-Gerät ist vorzugsweise ein Gerät, das einen Einstiegspunkt in ein Kernnetzwerk, beispielsweise eines Unternehmens oder eines Dienstanbieters, bereitstellt.

Es ist denkbar, dass das Edge-Gerät in unmittelbarer Nähe zu dem Türsystem und/oder der Türvorrichtung installiert ist und/oder dass das Edge-Gerät als Teil des Türsystems und/oder der Türvorrichtung ausgebildet ist.

Es ist denkbar, dass das Edge-Gerät ein von dem Türsystem und/oder der Türvorrichtung separates Modul ist, welches über eine Datenverbindung mit der Steuerungsvorrichtung des Türsystems und/oder der Türvorrichtung verbunden ist. Es ist alternativ denkbar, dass das Edge-Gerät ein Teil der Steuerungsvorrichtung ist, so dass beispielsweise eine Kombination aus einer Mikrocontrollersteuerung und einem Embedded Linux Device ausgebildet ist. Es ist denkbar, dass das Edge-Gerät ein Erweiterungsmodul mit Machine-Learning-Funktionen und/oder Datenübertragungs-Mitteln
-- für eine Türvorrichtung, und/oder
-- für ein Türsystem, und/oder
-- für einer Steuerungsvorrichtung eines Türsystems und/oder einer Türvorrichtung ist.

Es ist denkbar, dass das Edge-Gerät sowohl die Statusermittlungseinrichtung als auch die Steuerungsvorrichtung des Türsystems und/oder der Türvorrichtung umfasst. In diesem Fall ist es insbesondere denkbar, dass, insbesondere neben dem Edge-Gerät, keine separate Microcontroller-Türsteuerung notwendig ist.

Es ist denkbar, dass das Edge-Gerät in vorteilhafter Weise eine Erweiterung für eine Türvorrichtung ist. Das Edge-Gerät ist dabei beispielsweise als Chip und/ oder Stick ausgebildet, insbesondere als spezieller künstliche Intelligenz-Chip und/oder -Stick, welcher mit der Türvorrichtung und/oder dem Türsystem über eine Schnittstelle verbindbar ausgebildet ist. Besonders bevorzugt ist das Edge-Gerät zur Verarbeitung vergleichsweise großer Datenmengen vorgesehen.

Es ist denkbar, dass das Edge-Gerät und/oder die Steuerungsvorrichtung um eine Statusermittlungseinrichtung gemäß einer Ausführungsform der vorliegenden Erfindung und/oder deren Funktionalität erweitert wird. Es ist dabei möglich, dass ein Edge-Gerät und/oder eine Türsteuerung durch ein oder mehrere künstliche Intelligenz-Hardware-Geräte, insbesondere spezielle künstliche Intelligenz-Hardware (bzw. A.I. Hardware), wie etwa einen oder mehrere Chips und/oder USB-Sticks, erweitert wird. Ein derartiges künstliche Intelligenz-Hardware-Gerät weist typischerweise eine Vielzahl von Rechenkernen, bevorzugt zumindest 16 Rechenkerne, besonders bevorzugt mindestens 100 Rechenkerne, auf. Vorzugsweise ist das künstliche Intelligenz-Hardware-Gerät somit insbesondere derart eingerichtet, dass es eine vergleichsweise große Menge paralleler Prozesse mit einer vergleichsweise sehr hohen Geschwindigkeit verarbeiten kann.

Es ist denkbar, dass - insbesondere zur Einrichtung der Statusermittlungseinrichtung - ein Edge-Gerät und/oder eine Steuerungsvorrichtung durch ein oder mehrere künstliche Intelligenz-Hardware-Geräte (bzw. A.I. Hardware), wie beispielsweise einen oder mehrere Chips und/oder Sticks, erweitert werden, die auf parallele Datenverarbeitung spezialisiert sind. Beispiele für derartige spezielle künstliche Intelligenz-Hardware-Geräte sind GPUs (Graphics Processing Unit) und TPUs (Tensor Processing Unit). Hierdurch kann die Rechenleistung für künstliche Intelligenz-Anwendungen deutlich gesteigert werden.

Es ist denkbar, dass ein Türsystem ein oder mehrere Untersysteme aufweist, die jeweils ein oder mehrere sich bewegende Teile umfassen. Jedes sich bewegende Teil eines Türsystems und/oder einer Türvorrichtung, insbesondere ein oder mehrere Zahnräder im Getriebe, und/oder ein Motor, weist charakteristische Vibrationen auf und/oder hat einen charakteristischen akustischen Fingerabdruck. Derartige charakteristische Vibrationen und/oder Fingerabdrücke sind in einer Gesamtkurve, insbesondere in einem Körperschalsignal des Türsystems und/oder der Türvorrichtung und/oder des Untersystems sichtbar und können den einzelnen Untersystemen (bzw. sich bewegenden Teilen) zugeordnet werden.

Gemäß einer vorteilhaften Ausführungsform der vorliegenden Erfindung ist eine Trennung in geschwindigkeitsabhängige und geschwindigkeitsunabhängige Effekte des Türsystems und/oder eines oder mehrerer der Untersysteme des Türsystems denkbar. Unter anderem sind hierbei die folgenden Ausführungsbeispiele denkbar:

### Erstes Beispiel:

Motorvibrationen sind direkt abhängig von der Geschwindigkeit und können bei gewissen Drehzahlen ihr Maximum erzeugen.

### Zweites Beispiel:

Eine Pulsweitenmodulation und/oder eine Frequenz einer Pulsweitenmodulation, insbesondere zur Ansteuerung eines Motors, ist stets konstant und unabhängig von der Geschwindigkeit.

### Drittes Beispiel:

Ein defektes Kugellager in einer Rolle ist frequenztechnisch an die Bewegungsgeschwindigkeit gekoppelt.

Neben den vorhergehend beschriebenen ersten, zweiten und dritten Beispielen sind eine Vielzahl weiterer Ausführungsformen für unterschiedliche Arten und Typen von Türsystemen denkbar.

Gemäß einer Ausführungsform der vorliegenden Erfindung ist es möglich, dass die Geschwindigkeit des Türsystems und/oder der Türvorrichtung und/oder der Körperschall des Türsystems und/oder der Türvorrichtung mithilfe von Sensorvorrichtungen ermittelt werden. Die Geschwindigkeit des Türsystems und/oder der Türvorrichtung und/oder der Körperschall des Türsystems und/oder der Türvorrichtung werden insbesondere als Teil der mindestens einen Messinformation im Messschritt ermittelt. Es ist besonders vorteilhaft denkbar, dass aus geschwindigkeitsabhängigen Körperschallpegeln geschwindigkeitsunabhängige Variablen berechnen werden, die zur Gesamtklassifizierung eines möglichen Defekts oder Verschleißes während eines kompletten Fahrtzyklus verwendbar sind.

Ein Beispiel hierfür ist im Folgenden beschrieben:
Wenn ein Kugellager defekt ist, erzeugt es Schleifgeräusche. Je höher die Drehgeschwindigkeit ist, desto höher ist die erzeugte und messbare (Schleif)-Frequenz. Durch ein Herausrechnen der Geschwindigkeit lässt sich aus einer Gesamtkurve über einen kompletten Fahrzyklus, der verschiedene Geschwindigkeiten aufweist, auf das spezifische defekte Kugellager schließen. Hierbei ist ein geschwindigkeitsunabhängiger Pegel einer Messung, insbesondere eines Fahrtzyklus, sichtbar, der überwacht werden kann. Dieser messbare Pegel verhält sich insbesondere proportional zum Verschleiß.

Gemäß einer Ausführungsform der vorliegenden Erfindung ist es möglich, dass das künstliche Intelligenz-System ein Machine-Learning-System, ein Deep-Learning-System, ein neuronales Netz und/oder eine Musterkennung aufweist.

Ein weiterer Gegenstand der vorliegenden Erfindung ist ein System zur Ermittlung und/oder Überprüfung eines Status eines Türsystems, wobei das System eine Statusermittlungseinrichtung und das Türsystem umfasst, wobei das Türsystem zumindest ein erstes Untersystem und ein zweites Untersystem aufweist,
- wobei die Statusermittlungseinrichtung zum Erhalten mindestens einer ermittelten Messinformation betreffend das Türsystem konfiguriert ist,
- wobei die Statusermittlungseinrichtung zur Ermittlung und/oder Überprüfung des Status des Türsystems mithilfe eines Modells sowie mithilfe der mindestens einen ermittelten Messinformation konfiguriert ist, wobei das Modell einen ersten Modellblock für das erste Untersystem und einen zweiten Modellblock für das zweite Untersystem aufweist.

Das System umfasst insbesondere eine Statusermittlungseinrichtung gemäß einer Ausführungsform der vorliegenden Erfindung und das Türsystem und/oder die Türvorrichtung.

Das System umfasst vorzugsweise Mittel, die zur Ausführung eines Verfahrens zur Ermittlung und/oder Überprüfung eines Status eines Türsystems gemäß einer Ausführungsform der vorliegenden Erfindung eingerichtet sind.

Es ist gemäß einer Ausführungsform der vorliegenden Erfindung denkbar, dass das System und/oder die Statusermittlungseinrichtung einen digitalen Zwilling (digital twin) für das Türsystem und/oder die Türvorrichtung aufweist, und/oder dass das System und/oder die Statusermittlungseinrichtung auf einen digitalen Zwilling für das Türsystem und/oder die Türvorrichtung zugreifen kann.

Gemäß einer Ausführungsform der vorliegenden Erfindung ist es vorgesehen, dass das System eine Messvorrichtung und/oder eine Steuerungsvorrichtung umfasst,
wobei die Messvorrichtung derart konfiguriert ist, dass die Messvorrichtung durch eine Messung einer Messgröße des Türsystems die mindestens eine Messinformation ermittelt, wobei die Messvorrichtung insbesondere derart konfiguriert ist, dass die Messvorrichtung der Statusermittlungseinrichtung die mindestens eine Messinformation bereitstellt, und/oder
wobei die Steuerungsvorrichtung derart konfiguriert ist, dass die Steuerungsvorrichtung die mindestens eine Messinformation durch eine Einstellung und/oder Ermittlung einer Ansteuerungsgröße des Türsystems ermittelt, wobei die Steuerungsvorrichtung insbesondere derart konfiguriert ist, dass die Steuerungsvorrichtung der Statusermittlungseinrichtung die mindestens eine Messinformation bereitstellt.

Es ist denkbar, dass die Messvorrichtung und/oder die Steuerungsvorrichtung teilweise oder vollständig als Teil der Türvorrichtung und/oder als Teils des Türsystems ausgebildet sind. Es ist denkbar, dass die Messvorrichtung und/oder die Steuerungsvorrichtung teilweise oder vollständig extern von dem Türsystem und/oder der Türvorrichtung ausgebildet sind. Die Messvorrichtung und/oder die Steuerungsvorrichtung sind dabei dem Türsystem zumindest zugeordnet.

Gemäß einer Ausführungsform der vorliegenden Erfindung ist es denkbar, dass die mindestens eine Messvorrichtung und/oder Steuerungsvorrichtung eine, mehrere oder alle der folgenden Vorrichtungen aufweist:
- einen Körperschallsensor,
- einen akustischen Sensor,
- einen elektrischen Spannungssensor,
- einen elektrischen Stromsensor,
- einen Temperatursensor,
- einen optischen Sensor, beispielsweise eine Kamera und/oder einen Infrarotsensor,
- einen Kraftsensor,
- einen Dehnungssensor,
- ein Weg- bzw. Entfernungsmessgerät.

Die Messvorrichtung und/oder Steuerungsvorrichtung ist dabei vorzugsweise mit einem oder mehreren Sensoren oder Messgeräten bestückt, die dazu geeignet sind, die Messinformationen zu ermitteln. Die Wahl der verwendeten Sensoren und/oder Messgeräte hängt insbesondere von den mithilfe der Messinformationen betrachteten Messgrößen und/oder Ansteuerungsgrößen ab.

Gemäß einer Ausführungsform der vorliegenden Erfindung ist es denkbar, dass die mindestens eine Messvorrichtung und/oder Steuerungsvorrichtung mindestens einen Körperschallsensor aufweist. Insbesondere Formänderungen im Zuge eines Verschleißes, bspw. Abrieb, lassen sich durch Körperschall ermitteln. Ferner kann der Körperschall bzw. seine Änderungen unterschiedlicher Untersysteme für jedes Untersystem spezifisch ermittelt werden, was eine bauteilspezifische Ermittlung ermöglicht.

Gemäß einer Ausführungsform der vorliegenden Erfindung ist es denkbar, dass die mindestens eine Messvorrichtung und/oder Steuerungsvorrichtung mindestens einen akustischen Sensor aufweist.

Gemäß einer Ausführungsform der vorliegenden Erfindung ist es denkbar, dass die mindestens eine Messvorrichtung und/oder Steuerungsvorrichtung mindestens einen elektrischen Spannungssensor aufweist.

Gemäß einer Ausführungsform der vorliegenden Erfindung ist es denkbar, dass die mindestens eine Messvorrichtung und/oder Steuerungsvorrichtung mindestens einen elektrischen Stromsensor aufweist.

Gemäß einer Ausführungsform der vorliegenden Erfindung ist es denkbar, dass die mindestens eine Messvorrichtung und/oder Steuerungsvorrichtung mindestens einen Temperatursensor aufweist. Dadurch lassen sich erhöhte Reibungen bei mechanischen Bauteilen und/oder erhöhte Widerstände bei elektrischen Bauteilen ermitteln.

Gemäß einer Ausführungsform der vorliegenden Erfindung ist es denkbar, dass die mindestens eine Messvorrichtung und/oder Steuerungsvorrichtung mindestens einen optischen Sensor, beispielsweise eine Kamera und/oder einen Infrarotsensor, aufweist. Dabei kann die Messinformation einen Vergleich bzw. ein Vergleichsergebnis zwischen mehreren Bildaufnahmen, insbesondere zumindest zwei Bildaufnahmen, welche zu unterschiedlichen Zeitpunkten aufgenommen wurden, insbesondere nach einem bestimmten Zeitintervall aufgenommen, darstellen. Eine derartige Messinformation kann insbesondere eine Verschleißerkennung bei größeren Bauteilen, insbesondere bei Bauteilen bspw. bei einem Getrieberad eines Getriebes, einem Rotor des Motors und/oder einem Zahnriemen, insbesondere von Schiebetürsystemen und/oder Karusselltürsystemen, ermöglichen. Denn solche Bauteile sind in der Regel größer dimensioniert, sodass eine solche Erkennung möglich wird.

Gemäß einer Ausführungsform der vorliegenden Erfindung ist es denkbar, dass die mindestens eine Messvorrichtung und/oder Steuerungsvorrichtung mindestens einen Kraftsensor aufweist.

Gemäß einer Ausführungsform der vorliegenden Erfindung ist es denkbar, dass die mindestens eine Messvorrichtung und/oder Steuerungsvorrichtung mindestens einen Dehnungssensor aufweist.

Gemäß einer Ausführungsform der vorliegenden Erfindung ist es denkbar, dass die mindestens eine Messvorrichtung und/oder Steuerungsvorrichtung mindestens ein Weg- bzw. Entfernungsmessgerät aufweist.

Gemäß einer Ausführungsform der vorliegenden Erfindung, insbesondere für den Fall, dass das Türsystem eine Antriebseinheit der Türvorrichtung umfasst, umfassen die Untersysteme des Türsystems eines, mehrere oder alle der folgenden Untersysteme:
- ein Getriebe,
- einen Laschenwagen,
- eine Tür,
- einen Motor,
- eine elektronische Steuerung,
- eine Umlenkeinheit, beispielsweise eine Umlenkrolle und/oder einen Zahnriemen,
- einen Energiespeicher, beispielsweise eine Feder und/oder ein Akku,
- ein Netzteil,
- ein Kraftübertragungselement, beispielsweise einen Zahnriemen.

Bevorzugt ist denkbar, dass für ein als Antriebseinheit ausgebildetes Türsystem zumindest ein als Getriebe ausgebildetes Untersystem des Türsystems vorhanden ist. In diesem Fall ist es besonders vorteilhaft denkbar, dass die mindestens eine Messinformation Akustik, insbesondere Körperschall, eine Geschwindigkeit, Position und/oder Beschleunigung eines bewegten Teils des Motors und/oder des Getriebes umfasst. Insbesondere kann es dabei eine Winkelgeschwindigkeit, Winkelposition und/oder Winkelbeschleunigung eines Rotors eines Motors und/oder eines Getrieberads des Getriebes sein. Derart kann besonders vorteilhaft ein Verschleiß der Antriebseinheit und/oder des Getriebes ermittelt werden.

Gemäß einer Ausführungsform der vorliegenden Erfindung ist es besonders vorteilhaft denkbar, dass für ein als Antriebseinheit ausgebildetes Türsystem zumindest ein als Motor ausgebildetes Untersystem des Türsystems vorhanden ist. In diesem Fall ist es besonders vorteilhaft denkbar, dass die mindestens eine Messinformation Akustik, insbesondere Körperschall, eine Stellspannung, eine Pulsweitenmodulation und/oder einen Motorstrom umfasst oder betrifft. Hierdurch kann eine besonders vorteilhafte Verschleißermittlung erreicht werden.

Es ist gemäß einer Ausführungsform der vorliegenden Erfindung denkbar, dass das System derart konfiguriert ist, dass durch die im Statusermittlungsschritt durchgeführte Ermittlung und/oder Überprüfung des Status des Türsystems eine Vorhersage getroffen werden kann, wie lange das Türsystem noch problemlos funktionsfähig ist. Dies kann beispielsweise mithilfe einer Extrapolation der historischen Daten in die Zukunft erfolgen.

Mithilfe der vorliegenden Erfindung kann eine besonders vorteilhafte frühzeitige Erkennung von Verschleißerscheinungen und potentiellen Defekten erreicht werden, was eine verbesserte Planung von Serviceeinsätzen und Wartungsarbeiten ermöglicht. So wäre ein Serviceeinsatz vor einem drohenden Ausfall des Türsystems möglich. Ferner könnte eine Servicekraft die notwendigen Ersatzteile für das Türsystem oder ein spezielles Untersystem des Türsystems mitbringen. Es ist denkbar, dass das System besonders vorteilhaft so konzipiert und/oder trainiert ist, dass es von selbst erkennt, welche Teile des Türsystems einen Verschleiß und/oder Defekt aufweisen. Somit können Mehrfachfahrten von Servicekräften zu einem sich in der Anwendung befindlichen Türsystem vermieden werden.

Ein weiterer Gegenstand der vorliegenden Erfindung ist ein Computerprogrammprodukt, insbesondere zur Ermittlung und/oder Überprüfung eines Status eines Türsystems, wobei das Computerprogrammprodukt Befehle umfasst, die bei einer Ausführung des Computerprogrammprodukts durch einen Computer, insbesondere durch ein System gemäß einer Ausführungsform der vorliegenden Erfindung und/oder durch eine Statusermittlungseinrichtung gemäß einer Ausführungsform der vorliegenden Erfindung, den Computer veranlassen, ein Verfahren gemäß einer Ausführungsform der vorliegenden Erfindung auszuführen. Der Computer kann eine einzige Computereinrichtung sein oder mehrere Computereinrichtungen umfassen. Die mehreren Computereinrichtungen können insbesondere an unterschiedlichen Orten angeordnet sein, beispielsweise teilweise als Teil der Türvorrichtung und/oder des Türsystems und teilweise als Teil oder verbunden mit einem Telekommunikationsnetz.

Ein weiterer Gegenstand der vorliegenden Erfindung ist ein computerlesbares Speichermedium, umfassend Befehle, die bei der Ausführung durch einen Computer, insbesondere durch ein System gemäß einer Ausführungsform der vorliegenden Erfindung und/oder durch eine Statusermittlungseinrichtung gemäß einer Ausführungsform der vorliegenden Erfindung, diesen veranlassen, ein Verfahren gemäß einer Ausführungsform der vorliegenden Erfindung auszuführen.

Für die erfindungsgemäße Statusermittlungseinrichtung, das erfindungsgemäße System, das erfindungsgemäße Computerprogrammprodukt und das erfindungsgemäß computerlesbare Speichermedium können dabei die Merkmale, Ausführungsformen und Vorteile Anwendung finden, die bereits im Zusammenhang mit dem erfindungsgemäßen Verfahren zur Ermittlung und/oder Überprüfung eines Status eines Türsystems oder im Zusammenhang mit einer Ausführungsform des erfindungsgemäßen Verfahrens beschrieben worden sind. Für das erfindungsgemäße Verfahren, das erfindungsgemäße System, das erfindungsgemäße Computerprogrammprodukt und das erfindungsgemäß computerlesbare Speichermedium können dabei die Merkmale, Ausführungsformen und Vorteile Anwendung finden, die bereits im Zusammenhang mit der erfindungsgemäßen Statusermittlungseinrichtung oder im Zusammenhang mit einer Ausführungsform der erfindungsgemäßen Statusermittlungseinrichtung beschrieben worden sind. Für das erfindungsgemäße Verfahren, die erfindungsgemäße Statusermittlungseinrichtung, das erfindungsgemäße Computerprogrammprodukt und das erfindungsgemäß computerlesbare Speichermedium können dabei die Merkmale, Ausführungsformen und Vorteile Anwendung finden, die bereits im Zusammenhang mit dem erfindungsgemäßen System oder im Zusammenhang mit einer Ausführungsform des erfindungsgemäßen Systems beschrieben worden sind. Auch für das erfindungsgemäße Verfahren zur Erzeugung eines Modells können die Merkmale, Ausführungsformen und Vorteile Anwendung, die im Zusammenhang mit den weiteren Gegenständen der Erfindung oder deren Ausführungsformen beschrieben worden sind.

Nachfolgend sollen weitere Vorteile und Einzelheiten der Erfindung an-hand den in den Zeichnungen dargestellten Ausführungsbeispielen erläutert werden. Hierin zeigt
- Fig. 1: eine schematische Darstellung eines Systems gemäß einem Ausführungsbeispiel der vorliegenden Erfindung;
- Fig. 2: eine schematische Darstellung eines Systems gemäß einem Ausführungsbeispiel der vorliegenden Erfindung;
- Fig. 3: eine schematische Darstellung eines Verfahrens zur Ermittlung und/oder Überprüfung eines Status eines Türsystems gemäß einem Ausführungsbeispiel der vorliegenden Erfindung;
- Fig. 4: eine schematische Darstellung einer Erzeugung eines Modells gemäß einem Ausführungsbeispiel der vorliegenden Erfindung;
- Fig. 5: eine schematische Darstellung eines Modells gemäß einem Ausführungsbeispiel der vorliegenden Erfindung;
- Fig. 6: eine schematische Darstellung einer mithilfe eines Modells gemäß dem Ausführungsbeispiel der Fig. 5 erhaltenen nominalen Modellkurve gemäß einer Ausführungsform der vorliegenden Erfindung;
- Fig. 7: eine schematische Darstellung der nominalen Modellkurve der Fig. 6 im Vergleich zu einer verschleißbehafteten Modellkurve gemäß einer Ausführungsform der vorliegenden Erfindung.

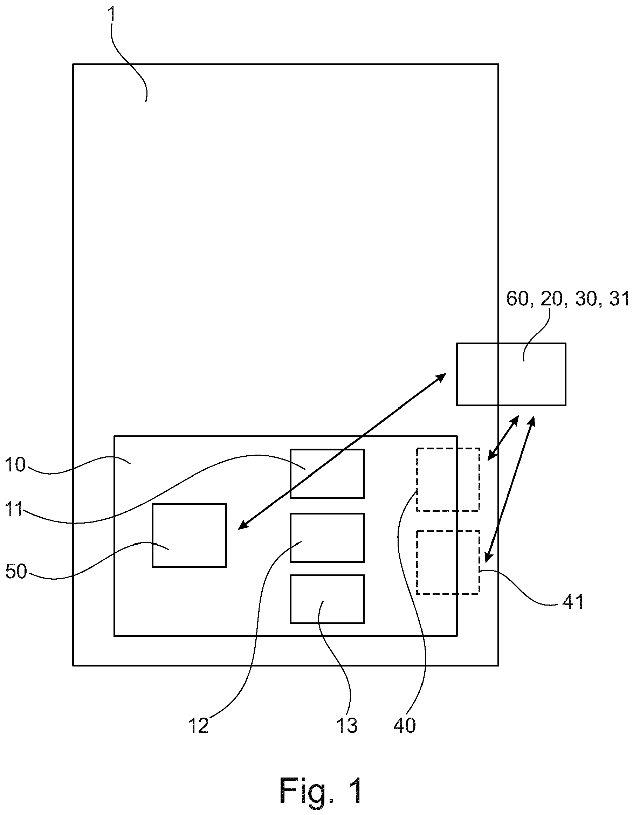

In Fig. 1 ist ein System gemäß einem Ausführungsbeispiel der vorliegenden Erfindung schematisch dargestellt. Das System umfasst eine Türvorrichtung 1 mit mindestens einem Türsystem 10. Es ist denkbar, dass die Türvorrichtung 1 weitere Türsysteme aufweist. Das Türsystem 10 ist vorzugsweise eine Antriebseinheit der Türvorrichtung 1. Alternativ ist es beispielsweise möglich, dass das Türsystem 10 ein elektrisches Schloss der Türvorrichtung 1 ist. Typischerweise umfasst das Türsystem 10 mehrere Untersysteme 11, 12, 13, die jeweils auch als Teile oder Gruppen von Teilen verstanden werden können, mit deren Hilfe das Türsystem 10 gebildet ist. Beispiele für derartige Untersysteme 11, 12, 13 eines als Antriebseinheit ausgebildeten Türsystems 10 sind ein Netzteil, eine elektronische Steuerung, ein Motor, ein Getriebe, ein Laschenwagen, ein Energiespeicher (insbesondere eine Feder) usw. Das Türsystem 10 weist eine Steuerungsvorrichtung 50 auf oder ist mit einer Steuerungsvorrichtung 50 verbunden. Auch die Steuerungsvorrichtung 50 kann gemäß einer Ausführungsform der vorliegenden Erfindung als Untersystem des Türsystems 10 verstanden werden. Die Steuerungsvorrichtung 50 ist insbesondere zur Steuerung des Türsystems 10 oder einer Funktion des Türsystems 10 eingerichtet. Beispielsweise steuert die Steuerungsvorrichtung 50 mithilfe einer Pulsweitenmodulation ein als Antriebseinheit ausgebildetes Türsystem 10. Hierfür gibt die Steuerungsvorrichtung 50 eine Ansteuerungsgröße aus. Es ist denkbar, dass die Ansteuerungsgröße durch die Steuerungsvorrichtung 50 vorgegeben und eingestellt und/oder gemessen bzw. ermittelt wird. Die eingestellten und/oder ermittelten Ansteuerungsgrößen können dabei als ermittelte Messinformationen 102 der Steuerungsvorrichtung 50 verstanden werden. Des Weiteren umfasst das Türsystem 10 eine oder mehrere Messvorrichtungen 40, 41, insbesondere Sensoren. Es ist alternativ denkbar, dass die Messvorrichtungen 40, 41 teilweise oder vollständig separat von dem Türsystem 10 ausgebildet sind. Mithilfe der Messvorrichtungen 40, 41 können eine oder mehrere Messgrößen des Türsystems 10 gemessen werden. Beispiele für derartige Messvorrichtungen 40, 41 sind Körperschallsensoren, akustische Sensoren, Spannungssensoren, Stromsensoren, Temperatursensoren, optische Sensoren usw. Durch Messung von Messgrößen ermitteln die Messvorrichtungen 40, 41 Messinformationen 100, 101 betreffend das Türsystem 10.

Die Messinformationen 100, 101, 102 betreffen insbesondere einen Betriebsphase oder einen Teilbereich einer Betriebsphase des Türsystems 10 bzw. der Türvorrichtung 1. Bei dem Teilbereich 90 handelt es sich insbesondere um einen oder mehrere zusammenhängende oder separate Bereiche 91, 92, 93 ,94 einer Betriebsphase der Türvorrichtung 1. Die Steuerungsvorrichtung 50 und/oder die Messvorrichtungen 40, 41 stehen mit einem Edge-Gerät 60 in Kommunikationsverbindung. Es ist denkbar, dass das Edge-Gerät 60 als separate Einrichtung mit dem Türsystem 10 und/oder der Türvorrichtung 1 verbunden ist. Es ist alternativ denkbar, dass das Edge-Gerät 60 lediglich in der Umgebung der Türvorrichtung 1 und/oder des Türsystems 10 angeordnet ist. Es ist alternativ denkbar, dass das Edge-Gerät 60 gemeinsam mit der Steuerungsvorrichtung 50 verbaut ist. Vorzugsweise umfasst das Edge-Gerät 60 Kommunikationsmittel, insbesondere drahtlose Kommunikationsmittel, zur Kommunikation mit einem lokalen Netzwerk und/oder einem Telekommunikationsnetz. In dem dargestellten Ausführungsbeispiel umfasst das Edge-Gerät 60 eine Statusermittlungseinrichtung 30, die zur Ermittlung und/oder Überprüfung eines Status des Türsystems 10 eingerichtet ist. Die Statusermittlungseinrichtung 30 ist insbesondere derart konfiguriert, dass sie mithilfe eines Modells 20 und/oder mithilfe von Modellinformationen 200, insbesondere einer oder mehrerer Modellkurven, den Status des Türsystems 10 ermittelt und/oder überprüft. Die Modellinformationen 200, insbesondere eine oder mehrerer Modellkurven, beziehen sich dabei auf Messgrößen und/oder Ansteuerungsgrößen des Türsystems 10, die mithilfe der Steuerungsvorrichtung 50 und/oder den Messvorrichtungen 40, 41 als Messinformationen 100, 101, 102 ermittelt werden. Mithilfe des Modells 20 bzw. der Modellinformationen 200 können charakteristische Merkmale in den Messinformationen 100, 101, 102 bestimmten Untersystemen 11, 12, 13 bzw. deren Verschleißerscheinungen zugeordnet werden. Es kann beispielsweise mithilfe des Modells 20 ermittelt werden, an welchen Stellen oder Bereichen einer Messkurve ein bestimmter Verschleiß eines bestimmten Untersystems 11, 12, 13 erkennbar ist. Es ist somit denkbar, einen Abgleich zwischen mithilfe des Modells 20 erhaltenen Modellinformationen 200, wie beispielswiese einer Modellkurve und/oder einem Schwellenwert, und an dem Türsystem ermittelten Messinformation 100, 101, 102 durchzuführen. Dies dient in vorteilhafter Weise zur Ermittlung und/oder Überprüfung eines Status des Türsystems 10. Es ist beispielsweise denkbar, mithilfe eines Abgleichs zwischen einer Modellinformation 200 und mindestens einer Messinformation 100, 101, 102 zu bestimmen, ob eine kritische Grenze für einen Verschleiß des Türsystems 10 und/oder eines Untersystems 11, 12, 13 des Türsystems 10 erreicht ist. Ferner ist es optional möglich, dass die Statusermittlungseinrichtung 30 ein künstliche Intelligenz-System 31 aufweist, das zur Ermittlung und/oder Überprüfung des Status des Türsystems 10 verwendbar ist. Die Statusermittlungseinrichtung 30 kann auch separat von dem Edge-Gerät 60 ausgebildet sein. Es ist beispielsweise möglich, dass die Statusermittlungseinrichtung 30 mithilfe der Steuerungsvorrichtung 50 ausgebildet ist.

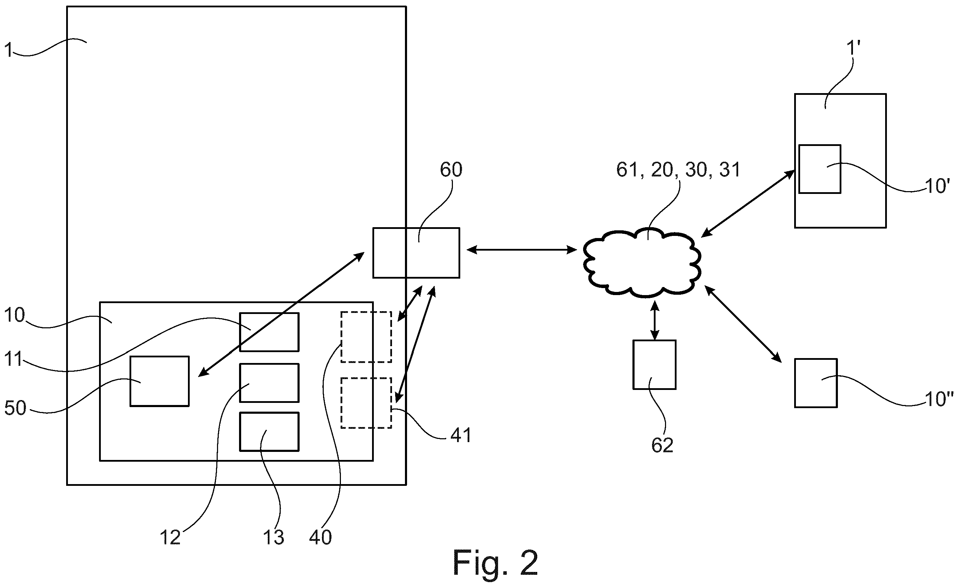

In Fig. 2 ist ein System gemäß einem Ausführungsbeispiel der vorliegenden Erfindung schematisch dargestellt. Im Unterschied zu dem in der Fig. 1 dargestellten System ist eine Cloud 61 gezeigt. Die Cloud 61 kann beispielsweise über ein Telekommunikationsnetz und entsprechende Kommunikationsmittel mit dem Edge-Gerät 60 in Kommunikationsverbindung stehen. Bei dem in der Fig. 2 dargestellten Ausführungsbeispiel ist die Statusermittlungseinrichtung 30 mithilfe der Cloud 61 eingerichtet. Die von den Messvorrichtungen 40, 41 und/oder der Steuerungsvorrichtung 50 ermittelten Messinformationen 100, 101, 102 werden über geeignete Kommunikationsmittel, beispielsweise mithilfe des Edge-Geräts 60, an die Cloud 61 übermittelt und derart der Statusermittlungseinrichtung 30 bereitgestellt. Die Cloud 61 umfasst einen Datenspeicher 62 und/oder steht mit einem Datenspeicher 62 in Kommunikationsverbindung. In dem Datenspeicher 62 können beispielsweise Messinformationen 100, 101, 102 des Türsystems 10 und/oder Trainingsdaten für das künstliche Intelligenz-System 31 gespeichert sein. Die Trainingsdaten umfassen vorzugsweise mithilfe des Modells 20 ermittelte und/oder ausgegebene Modellinformationen 200 und/oder Trainingsmessinformationen, die an einem oder mehreren weiteren Türsystemen 10', 10" gemessen und/oder ermittelt werden, und/oder Trainingsmessinformationen, die an dem Türsystem 10 ermittelt wurden. Die weiteren Türsysteme 10', 10" und/oder die zugehörigen weiteren Türvorrichtungen 1' weisen zur Übermittlung derartiger Trainingsmessinformationen vorzugsweise ebenso eine Kommunikationsverbindung mit der Cloud 61 und/oder dem Datenspeicher 62 auf. Es ist vorzugsweise möglich, dass es sich bei den weiteren Türsysteme 10', 10" um baugleiche oder ähnliche Systeme handelt, wie bei dem Türsystem 10.

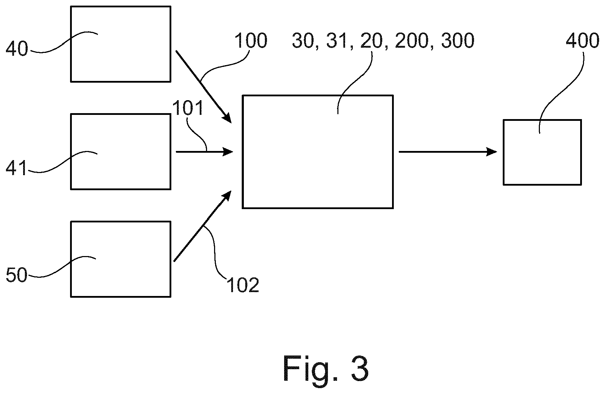

In Fig. 3 ist eine schematische Darstellung eines Verfahrens zur Ermittlung und/oder Überprüfung eines Status eines Türsystems 10 gemäß einem Ausführungsbeispiel der vorliegenden Erfindung gezeigt. Mithilfe von einer oder mehreren Messvorrichtungen 40, 41 werden Messinformationen 100, 101, betreffend eine oder mehrere Messgrößen des Türsystems 10, aufgenommen. Alternativ oder zusätzlich werden mithilfe einer Steuerungsvorrichtung Messinformationen 102, betreffend eine oder mehrere Ansteuerungsgrößen des Türsystems 10, ermittelt. Die Ermittlung der Messinformationen 100, 101, 102 findet dabei insbesondere im Betrieb der Türvorrichtung 1 statt, die das Türsystem 10 aufweist. Die ermittelten Messinformationen 100, 101, 102 werden einer Statusermittlungseinrichtung 30 bereitgestellt. Mithilfe eines Modells 20 bzw. mithilfe von Modellinformationen 200, beispielsweise Modellkurven 300 und/oder Schwellenwerten, ermittelt die Statusermittlungseinrichtung 30 einen Status des Türsystems 10 in Abhängigkeit der erhaltenen Messinformationen 100, 101, 102. Es ist optional denkbar, dass die Statusermittlungseinrichtung 30 ein künstliche Intelligenz-System (bzw. eine K.I.-Funktionalität) 31 aufweist, mit dessen Hilfe die Analyse der Messinformationen 100, 101, 102 zur Ermittlung des Status des Türsystems 10 durchgeführt wird. Wenn keine Verschleißerscheinungen in den Messinformationen 100, 101, 102 ermittelt werden, wird beispielsweise ein verschleißfreier Status des Türsystems 10 ermittelt. Wenn ein Verschleiß des Türsystems 10 oder eines Untersystems 11, 12, 13 des Türsystems 10 ermittelt wird, ist es denkbar, dass eine Verschleißinformation 400 von der Statusermittlungseinrichtung 30 ausgegeben wird. Eine solche Verschleißinformation 400 kann beispielsweise ein vorteilhaftes Zeitfenster und/oder einen Zeitpunkt für eine Wartung des Türsystems 10 angeben und/oder eine Information dazu enthalten, für welches Untersystem 11, 12, 13 ein Verschleiß (beispielsweise auch ein Defekt) erkannt wurde. Eine derartige Verschleißinformation 400 kann beispielsweise einer Servicekraft zur Verfügung gestellt werden und/oder für die Planung einer zukünftigen Wartung des Türsystems 10 und/oder der Türvorrichtung 1 verwendet werden. Hierdurch wird eine besonders vorteilhafte vorrauschauende Wartung (predictive maintenance) ermöglicht.

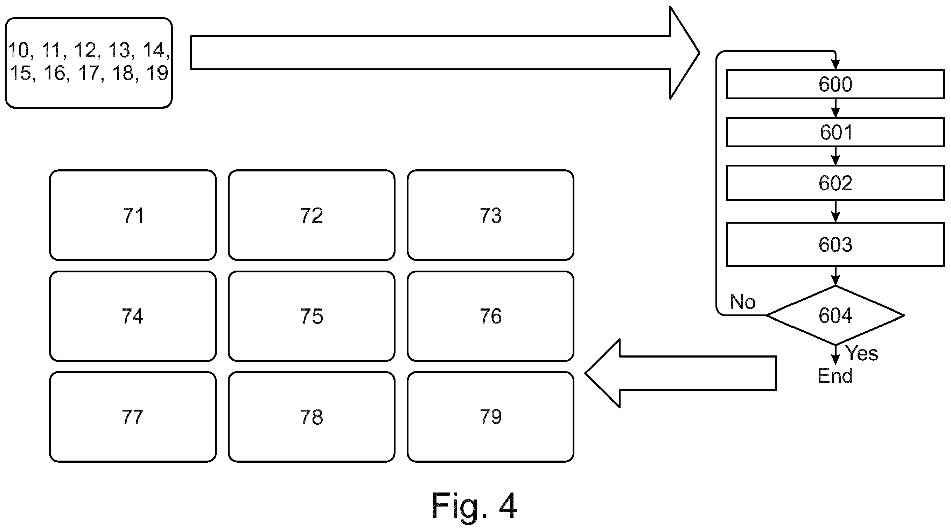

In Fig. 4 ist eine schematische Darstellung eines Verfahrens zur Erzeugung eines Modells 20 gemäß einem Ausführungsbeispiel der vorliegenden Erfindung gezeigt. Hierfür wird ein reales Türsystem 10 analysiert. In einem Systemeinflüssebestimmungsschritt 600 werden die Eigenschaften und Parameter der Untersysteme 11, 12, 13, 14, 15, 16, 17, 18, 19 bestimmt. Vorzugsweise werden in einem Systemeinflüssefilterungsschritt 601 die relevanten Systemeinflüsse herausgefiltert. Das Türsystem 10 wird in einem Systemkomponentenschritt 602 in einzelne Untersysteme 11, 12, 13, 14, 15, 16, 17, 18, 19 zerlegt bzw. unterteilt. In einem Wechselwirkungsschritt 603 werden die Wechselwirkungen zwischen den einzelnen Untersystemen 11, 12, 13, 14, 15, 16, 17, 18, 19 (bzw. Komponenten) ermittelt und/oder beschrieben. In einem Prüfschritt 604 des Modells wird eine Überprüfung durchgeführt, ob das Modell ein Genauigkeitskriterium erfüllt, also insbesondere eine gewünschte Genauigkeit aufweist. Falls die gewünschte Genauigkeit nicht erreicht wird, werden alle oder einige der Schritte 600, 601, 602, 603, 604 erneut durchgeführt, insbesondere bis die gewünschte Genauigkeit erreicht wird. Wenn im Prüfschritt 604 die gewünschte Genauigkeit erreicht ist, wird der Ablauf der Schritte 600, 601, 602, 603, 604 beendet. Es wird eine Dekomposition und Wortmodellbildung durchgeführt. Das Modell 20 weist vorzugsweise einzelne Modellblöcke 71, 72, 73, 74, 75, 76, 77, 78, 79 für alle relevanten Untersysteme 11, 12, 13, 14, 15, 16, 17, 18, 19 auf. Die Modellblöcke 71, 72, 73, 74, 75, 76, 77, 78, 79 können auch als Simulationsteilmodelle verstanden werden.

Als Beispiele sind die folgenden Modellblöcke denkbar:
Der erste Modellblock 71 betrifft ein Getriebe.
Der zweite Modellblock 72 betrifft einen Laschenwagen.
Der dritte Modellblock 73 betrifft eine Tür.
Der vierte Modellblock 74 betrifft einen Motor.
Der fünfte Modellblock 75 betrifft eine elektronische Steuerung.
Der sechste Modellblock 76 betrifft eine Umlenkeinheit, insbesondere eine Umlenkrolle und/oder einen Zahnriemen.
Der siebte Modellblock 77 betrifft einen Energiespeicher, insbesondere eine Feder.
Der achte Modellblock 78 betrifft ein Netzteil.
Der neunte Modellblock 79 betrifft ein Kraftübertragungselement, beispielsweise einen Zahnriemen.

Es sind eine Vielzahl anderer Möglichkeiten für Modellblöcke für unterschiedliche Türsysteme denkbar.

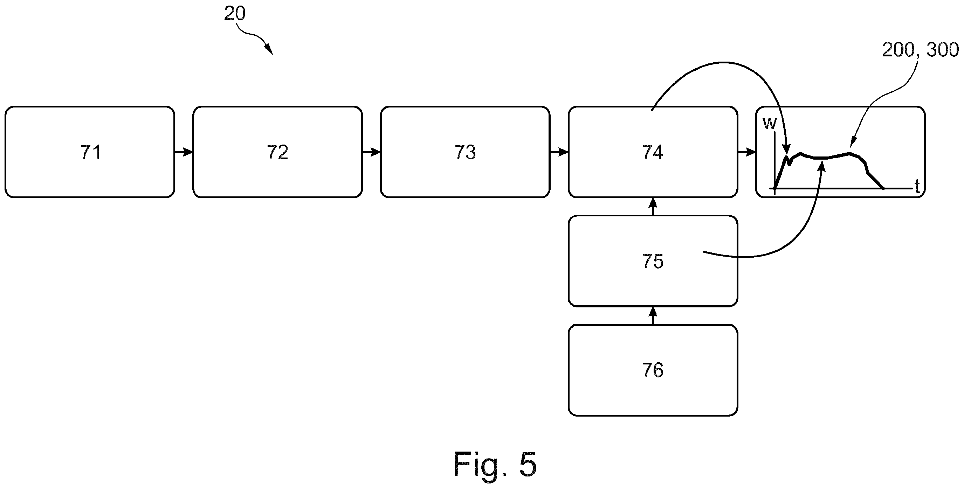

In Fig. 5 ist eine schematische Darstellung eine Modells 20 gemäß einem Ausführungsbeispiel der vorliegenden Erfindung gezeigt. Das Beispiel zeigt ein Modell 20 für ein als Antriebseinheit ausgebildetes Türsystem 10. Das Modell 20 umfasst einen ersten Modellblock 71 für ein Netzteil, einen zweiten Modellblock 72 für eine elektronische Steuerung, einen dritten Modellblock 73 für einen Motor, einen vierten Modellblock 74 für ein Getriebe, einen fünften Modellblock 75 für einen Laschenwagen und einen sechsten Modellblock 76 für einen Energiespeicher (insbesondere eine Feder). Mithilfe des Modells 20 werden Modellinformationen 200, insbesondere eine Modellkurve 300 für eine am Türsystem messbare Messgröße und/oder Ansteuerungsgröße, erzeugt. In dieser charakteristischen Modellkurve 300 können einzelne Effekte, insbesondere Verschleißeffekte, der in den Modellblöcken betrachteten Untersysteme des Türsystems 10 erkannt und zu den Untersystemen zugeordnet werden. Diese Zusammenhänge können mithilfe des Modells 20 durch Variation der Eigenschaften und Parameter der Modellblöcke identifiziert werden. Hierbei kann insbesondere auch ein Teilbereich 90 einer Betriebsphase des Türsystems 10 identifiziert werden, in dem bestimmte Verschleißerscheinungen des Türsystems 10 oder von Untersystemen des Türsystems 10 in Messinformationen identifizierbar sind. Der Teilbereich 90 kann dabei einen zusammenhängenden Bereich oder zwei oder mehr separate und beabstandete Bereiche der Betriebsphase umfassen. Bei der Modellkurve 300 handelt es sich beispielsweise um eine Winkelgeschwindigkeit w an der Antriebswelle des Getriebes über die Zeit t bei einer Öffnungsfahrt der Türvorrichtung. In diesem Ausführungsbeispiel zeigt sich ein Getriebeverschleiß im vorderen Bereich der Öffnungsfahrt. Ein erhöhter Getriebeverschleiß führt zu einem Abfallen der Kurve nach der Beschleunigungsfahrt. Der Getriebeverschleiß ist dabei beispielsweise wie folgt festlegbar: Getriebeverschleiß = aktuelles Getriebespiel - initiales Getriebespiel. Ein Verschleiß der Lagerung des Laschenwagens macht sich beispielsweise durch ein Durchbiegen der Kurve in der Konstantfahrt bemerkbar, insbesondere durch einen Einbruch der Winkelgeschwindigkeit mit Wegfall der Beschleunigungskomponenten.

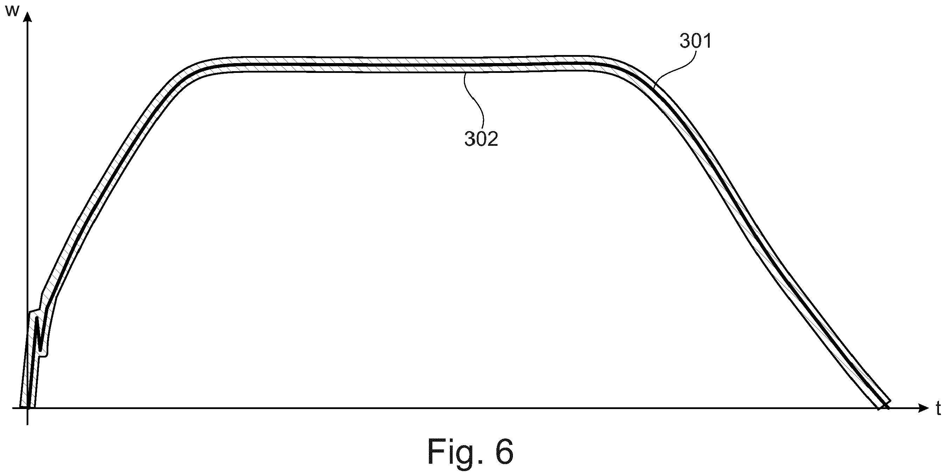

In Fig. 6 ist eine schematische Darstellung einer mithilfe eines Modells 20 gemäß dem Ausführungsbeispiel der Fig. 5 erhaltenen nominalen Modellkurve 301 gezeigt. Die nominale Modellkurve 301 stellt die Winkelgeschwindigkeit w der Antriebswelle des Getriebes in Abhängigkeit der Zeit t für einen Öffnungsvorgang der Türvorrichtung dar, die das Türsystem 10 umfasst. Die nominale Modellkurve 301 ist hierbei die Kurve, die ohne Verschleißerscheinungen des Türsystems, also insbesondere in einem Normalzustand bzw. initialen Gut-Zustand des Türsystems 10, erhalten wird. Ferner sind fertigungs-und/oder toleranzbedingte Abweichungen 302 des Türsystems 10 ohne einen Verschleiß dargestellt. Derartige fertigungs- und/oder toleranzbedingte Abweichungen können in dem Modell 20 für die verschiedenen Untersysteme des Türsystems 10 und das gesamte Türsystem 10 mithilfe der Modellblöcke und deren Eigenschaften berücksichtigt werden.

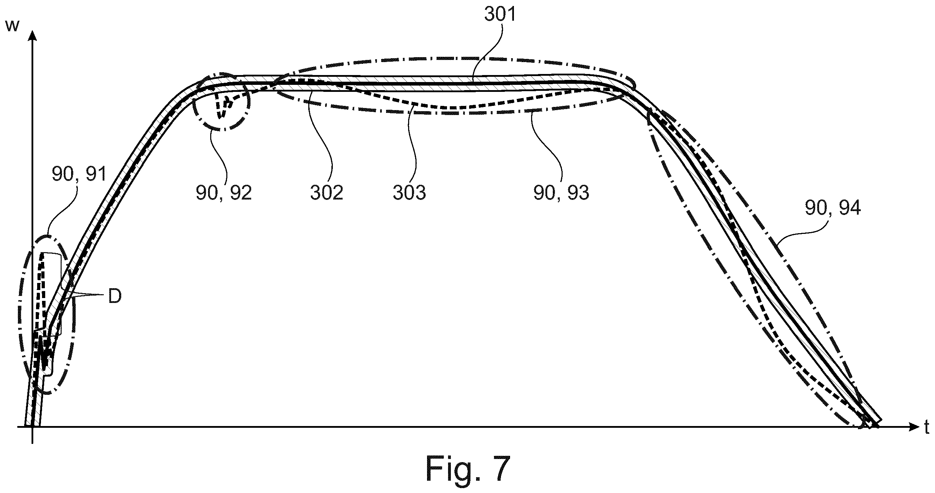

In Fig. 7 ist eine schematische Darstellung der nominalen Modellkurve 301 der Fig. 6 (ohne Verschleiß) im Vergleich zu einer verschleißbehafteten Modellkurve 303 gezeigt. Mithilfe des Modells 20 bzw. mithilfe der durch das Modell erzeugten Modellkurven 301, 303 ist der Teilbereich 90 (bzw. die Bereiche 91, 92, 93, 94 des Teilbereichs 90) des Öffnungsvorgangs der Türvorrichtung 10 identifizierbar, in dem sich Verschleißeffekte von einzelnen Untersystemen bei einer Messung der Winkelgeschwindigkeit w der Antriebswelle des Getriebes zeigen. Es sind insbesondere ein erster, zweiter, dritter und vierter Bereich 91, 92, 93, 94 des Teilbereichs 90 der Betriebsphase dargestellt. Der Getriebeverschleiß kann beispielsweise über eine Differenz D zwischen einem aktuellen Wert und einem nominellen bzw. initialen Wert ermittelt und/oder quantifiziert werden. Im ersten Bereich 91, insbesondere zu Beginn der Öffnungsfahrt, sind mit zunehmenden Getriebespiel, Schwingungen erkennbar. Das zunehmende Getriebespiel ist ein Verschleißeffekt des Getriebes, der somit im ersten Bereich 91 detektierbar ist. Im zweiten Bereich 92 führt eine erhöhte Reibung und ein erhöhter Verschleiß des Getriebes zu einem Einbruch der Winkelgeschwindigkeit nach dem Ende der Beschleunigungsfahrt. Im dritten Bereich 93, während einer Konstantfahrt, ist ebenso ein Einbruch der Winkelgeschwindigkeit mit zunehmender Reibung und zunehmendem Getriebeverschleiß erkennbar. Im vierten Bereich 94 entstehen mit zunehmender Reibung Schwingungen um die nominale Modellkurve 301. Mithilfe des Modells 20 kann somit ein Teilbereich 90, aufweisend einen oder mehrere separate Bereiche 91, 92, 93, 94, ermittelt werden, in dem Verschleißerscheinungen durch die Ermittlung von Messinformationen 100, 101, 102 eines Türsystems 20 bestimmbar sind und vorzugsweise einzelnen Untersystemen des Türsystems 10 zuordenbar sind. Die Fig. 7 zeigt ein Ausführungsbeispiel der vorliegenden Erfindung. Es sind eine Vielzahl weiterer Ausführungsbeispiele denkbar, bei denen beispielsweise andere Messgrößen als die Winkelgeschwindigkeit w zur Ermittlung von Verschleißerscheinungen und/oder zur Ermittlung des Teilbereichs 90 verwendet werden können. Wie vorhergehend beispielhaft dargestellt, können Verschleißeffekte in Türsystemen und Untersystemen von Türsystemen mithilfe eines erfindungsgemäßen Modells besonders vorteilhaft ermittelt werden. Dementsprechend ist es mithilfe eines derartigen Modells möglich, durch die Analyse von Messinformationen (betreffend Messgrößen und/oder Ansteuerungsgrößen, die an einem realen Türsystemen ermittelt werden) den Status, insbesondere den Verschleißstatus, des Türsystems und/oder eines Untersystems des Türsystems zu ermitteln.

### Bezugszeichenliste

- 1: Türvorrichtung
- 1': weitere Türvorrichtung
- 10: Türsystem
- 10', 10": weitere Türsysteme
- 11: erstes Untersystem
- 12: zweites Untersystem
- 13-19: weitere Untersysteme
- 20: Modell
- 30: Statusermittlungseinrichtung
- 31: künstliche Intelligenz-System
- 40: Messvorrichtung
- 41: Messvorrichtung
- 50: Steuerungsvorrichtung
- 60: Edge-Gerät
- 61: Cloud
- 62: Datenspeicher
- 71: erster Modellblock
- 72: zweiter Modellblock
- 73-79: weitere Modellblöcke
- 90: Teilbereich einer Betriebsphase
- 91: erster Bereich
- 92: zweiter Bereich
- 93: dritter Bereich
- 94: vierter Bereich
- 100: Messinformation
- 101: Messinformation
- 102: Messinformation
- 200: Modellinformation
- 300: Modellkurve
- 301: Modellkurve
- 302: Abweichungen
- 303: Modellkurve
- 400: Verschleißinformation
- 600: Systemeinflüssebestimmungsschritt
- 601: Systemeinflüssefilterungsschritt
- 602: Systemkomponentenschritt
- 603: Wechselwirkungsschritt
- 604: Prüfschritt
- D: Differenz
- t: Zeit
- w: Winkelgeschwindigkeit

## Patentansprüche

1. Verfahren zur Ermittlung und/oder Überprüfung eines Status eines Türsystems (10), wobei das Türsystem (10) zumindest ein erstes Untersystem (11) und ein zweites Untersystem (12) aufweist,
wobei das Verfahren die folgenden Schritte umfasst:
-- in einem Messschritt wird mindestens eine Messinformation (100, 101, 102) betreffend das Türsystem (10) ermittelt,
-- in einem Statusermittlungsschritt wird mithilfe eines Modells (20) sowie mithilfe der mindestens einen ermittelten Messinformation (100, 101, 102) der Status des Türsystems (10) ermittelt und/oder überprüft, wobei das Modell (20) einen ersten Modellblock (71) für das erste Untersystem (11) und einen zweiten Modellblock (72) für das zweite Untersystem (12) aufweist.

2. Verfahren nach Anspruch 1, wobei der erste Modellblock (71) zumindest eine Eigenschaft des ersten Untersystems (11) betrifft und wobei der zweite Modellblock (72) zumindest eine Eigenschaft des zweiten Untersystems (12) betrifft.

3. Verfahren nach einem der vorhergehenden Ansprüche, wobei die mindestens eine Messinformation (100, 101) mithilfe einer Messung einer Messgröße des Türsystems (10) durch eine Messvorrichtung (40, 41) ermittelt wird, und/oder wobei die mindestens eine Messinformation (102) durch eine Einstellung und/oder Ermittlung einer Ansteuerungsgröße des Türsystems (10) durch eine Steuerungsvorrichtung (50) ermittelt wird.

4. Verfahren nach einem der vorhergehenden Ansprüche,
-- wobei das Modell (20) mindestens eine Modellinformation (200), insbesondere eine Modellkurve, für die mindestens eine Messgröße und/oder Ansteuerungsgröße des Türsystems (10) umfasst, und/oder
-- wobei das Modell (20) zur Ausgabe von mindestens einer Modellinformation (200), insbesondere zur Ausgabe einer Modellkurve, für die mindestens eine Messgröße und/oder Ansteuerungsgröße des Türsystems (10) eingerichtet ist, wobei der Statusermittlungsschritt zur Ermittlung und/oder Überprüfung des Status des Türsystems (10) einen Abgleich der mindestens einen Messinformation (100, 101, 102) mit der mindestens einen Modellinformation (200) des Modells (20) umfasst.

5. Verfahren nach einem der vorhergehenden Ansprüche,
wobei mithilfe des Modells (20) eine Abhängigkeit der mindestens einen Messinformation (100, 101, 102) von mindestens einer Eigenschaft des ersten Untersystems (11) ermittelt und/oder quantifiziert wird, und/oder
wobei mithilfe des Modells (20) eine Abhängigkeit der mindestens einen Messinformation (100, 101, 102) von einer Variation von mindestens einer Eigenschaft des ersten Untersystems (11) ermittelt und/oder quantifiziert wird.

6. Verfahren nach Anspruch 5, wobei mithilfe der ermittelten Abhängigkeit der mindestens einen Messinformation (100, 101, 102) von der mindestens einen Eigenschaft des ersten Untersystems (11) und/oder mithilfe der ermittelten Abhängigkeit der mindestens einen Messinformation (100, 101, 102) von der Variation von der mindestens einen Eigenschaft des ersten Untersystems (11) - insbesondere als Teil des Statusermittlungsschritts - eine Verschleißerscheinung und/oder ein Verschleißstatus des ersten Untersystems (11) ermittelt wird.

7. Verfahren nach einem der vorhergehenden Ansprüche, wobei in einem Prüfschritt des Modells (20) - vorzugsweise vor dem Statusermittlungsschritt - eine Überprüfung und/oder ein Test des Modells (20) mithilfe von einem oder mehreren Messwerten und/oder Ansteuerungswerten betreffend das Türsystem (10) und/oder betreffend ein weiteres Türsystem (10', 10") durchgeführt wird, wobei bei der Überprüfung und/oder dem Test insbesondere überprüft wird, ob das Modell (20) ein Genauigkeitskriterium erfüllt.

8. Verfahren nach einem der vorhergehenden Ansprüche,
-- wobei mithilfe des Modells (20) ein Teilbereich (90) einer Betriebsphase des Türsystems (10) bestimmt wird, in dem eine Verschleißerscheinung des ersten Untersystems (11) und/oder des zweiten Untersystems (12) und/oder des Türsystems (10) mithilfe einer Ermittlung der mindestens einen Messinformation (100, 101, 102), insbesondere mithilfe der Ermittlung mindestens einer Messgröße und/oder Ansteuerungsgröße, bestimmbar ist; und/oder
-- wobei mithilfe eines künstlichen Intelligenz-Systems (31) ein Teilbereich (90) einer Betriebsphase des Türsystems (10) bestimmt wird, in dem eine Verschleißerscheinung des ersten Untersystems (11) und/oder des zweiten Untersystems (12) und/oder des Türsystems (10) mithilfe einer Ermittlung der mindestens einen Messinformation (100, 101, 102), insbesondere mithilfe der Ermittlung mindestens einer Messgröße und/oder Ansteuerungsgröße, bestimmbar ist.

9. Verfahren nach Anspruch 8, wobei die Betriebsphase des Türsystems einen Öffnungsvorgang und/oder einen Schließvorgang des Türsystems (10) und/oder einer das Türsystem (10) aufweisenden Türvorrichtung (1) umfasst, wobei der Teilbereich (90) der Betriebsphase lediglich ein Teilbereich des Öffnungsvorgangs und/oder des Schließvorgangs ist.

10. Verfahren nach einem der vorhergehenden Ansprüche,
wobei das Türsystem (10) ein Teilsystem einer Türvorrichtung (1) ist,
wobei das Türsystem (10) insbesondere eine Antriebseinheit der Türvorrichtung (1) ist oder eine Antriebseinheit der Türvorrichtung (1) umfasst.

11. Verfahren zur Erzeugung eines Modells (20), insbesondere zur Ermittlung und/oder Überprüfung eines Status eines Türsystems (10), wobei das Türsystem (10) zumindest ein erstes Untersystem (11) und ein zweites Untersystem (12) aufweist,
wobei das Verfahren zur Erzeugung des Modells (20) die folgenden Schritte umfasst:
-- Erzeugen eines ersten Modellblocks (71) für das erste Untersystem (11) und Erzeugen eines zweiten Modellblocks (72) für das zweite Untersystem (12),
-- Bilden des Modells (20) zumindest mithilfe des ersten Modellblocks (71) und des zweiten Modellblocks (72).

12. Statusermittlungseinrichtung (30) zur Ermittlung und/oder Überprüfung eines Status eines Türsystems (10), wobei das Türsystem (10) zumindest ein erstes Untersystem (11) und ein zweites Untersystem (12) aufweist,
- wobei die Statusermittlungseinrichtung (30) zum Erhalten mindestens einer ermittelten Messinformation (100, 101, 102) betreffend das Türsystem (10) konfiguriert ist,
- wobei die Statusermittlungseinrichtung (30) zur Ermittlung und/oder Überprüfung des Status des Türsystems (10) mithilfe eines Modells (20) sowie mithilfe der mindestens einen ermittelten Messinformation (100, 101, 102) konfiguriert ist, wobei das Modell (20) einen ersten Modellblock (71) für das erste Untersystem (11) und einen zweiten Modellblock (72) für das zweite Untersystem (12) aufweist.

13. System zur Ermittlung und/oder Überprüfung eines Status eines Türsystems (10), wobei das System eine Statusermittlungseinrichtung (30) und das Türsystem (10) umfasst, wobei das Türsystem (10) zumindest ein erstes Untersystem (11) und ein zweites Untersystem (12) aufweist,
- wobei die Statusermittlungseinrichtung (30) zum Erhalten mindestens einer ermittelten Messinformation (100, 101, 102) betreffend das Türsystem (10) konfiguriert ist,
- wobei die Statusermittlungseinrichtung (30) zur Ermittlung und/oder Überprüfung des Status des Türsystems (10) mithilfe eines Modells (20) sowie mithilfe der mindestens einen ermittelten Messinformation (100, 101, 102) konfiguriert ist, wobei das Modell (20) einen ersten Modellblock (71) für das erste Untersystem (11) und einen zweiten Modellblock (72) für das zweite Untersystem (12) aufweist.

14. System nach Anspruch 13, wobei das System eine Messvorrichtung (40, 41) und/oder eine Steuerungsvorrichtung (50) umfasst,
wobei die Messvorrichtung (40, 41) derart konfiguriert ist, dass die Messvorrichtung (40, 41) durch eine Messung einer Messgröße des Türsystems (10) die mindestens eine Messinformation (100, 101) ermittelt, wobei die Messvorrichtung (40, 41) insbesondere derart konfiguriert ist, dass die Messvorrichtung (40, 41) die mindestens eine Messinformation (100, 101) der Statusermittlungseinrichtung (30) bereitstellt, und/oder
wobei die Steuerungsvorrichtung (50) derart konfiguriert ist, dass die Steuerungsvorrichtung (50) die mindestens eine Messinformation (102) durch eine Einstellung und/oder Ermittlung einer Ansteuerungsgröße des Türsystems (10) ermittelt, wobei die Steuerungsvorrichtung (50) insbesondere derart konfiguriert ist, dass die Steuerungsvorrichtung (50) die mindestens eine Messinformation (102) der Statusermittlungseinrichtung (30) bereitstellt.

15. Computerprogrammprodukt, insbesondere zur Ermittlung und/oder Überprüfung eines Status eines Türsystems (10), wobei das Computerprogrammprodukt Befehle umfasst, die bei einer Ausführung des Computerprogrammprodukts durch einen Computer, insbesondere durch ein System nach einem der Ansprüche 13 oder 14 und/oder durch eine Statusermittlungseinrichtung (30) nach Anspruch 12, den Computer veranlassen, ein Verfahren nach einem der Ansprüche 1 bis 11 auszuführen.
